# EUROPEAN PATENT APPLICATION

(11) **EP 4 692 519 A1**
(43) Date of publication of application: **11.02.2026**
(21) Application number: 24779247.6
(22) Date of filing: 07.03.2024
(51) Int. Cl.: F01N 3/24, F01N 3/08, F01N 3/20, F01N 3/28

(54) **EXHAUST TREATMENT APPARATUS**

(30) Priority: 30.03.2023 JP 2023056341
(71) Applicant: Kanadevia Corporation, Osaka-shi, Osaka 559-8559 (JP)
(72) Inventor: TANAKA, Hironaka, Osaka-shi, Osaka 559-8559 (JP); HONDA, Yusuke, Osaka-shi, Osaka 530-0013 (JP); SATO, Yoshiyuki, Osaka-shi, Osaka 530-0013 (JP)
(74) Representative: Grünecker Patent- und Rechtsanwälte PartG mbB
(86) International application number: PCT/JP2024/008727
(87) International publication number: WO 2024/203113

(57) **Abstract**

An exhaust gas treatment apparatus (3) includes a sulfur adsorption part (41) which is provided in an exhaust passage (2), a catalyst part (42) which is provided on a downstream side of the sulfur adsorption part (41) in the exhaust passage (2), a gas temperature switching part (5) which is capable of switching between a normal gas inflow state in which the exhaust gas having a normal temperature flows into the sulfur adsorption part (41) and a high-temperature gas inflow state in which the exhaust gas having a temperature higher than the normal temperature flows into the sulfur adsorption part (41), a catalyst bypass passage (76) which is provided in the exhaust passage (2) and bypasses a target catalyst (422) included in the catalyst part (42), a passage switching part (6) which is capable of switching between a bypass state in which the exhaust gas flows in the catalyst bypass passage (76) and a non-bypass state in which the exhaust gas flows in the target catalyst (422), and a control part (30) which switches the passage switching part (6) from the non-bypass state to the bypass state in execution of regeneration of the sulfur adsorption part (41) by switching the gas temperature switching part (5) from the normal gas inflow state to the high-temperature gas inflow state.

## Description

### TECHNICAL FIELD

The present invention relates to an exhaust gas treatment apparatus.

### [CROSS REFERENCE TO RELATED APPLICATION]

The present application claims the benefit of priority to Japanese Patent Application No. 2023-56341 filed on March 30, 2023, the content of which is incorporated herein by reference in its entirety.

### BACKGROUND ART

In recent years, a movement of converting the fuel of ships from heavy oil to liquefied natural gas (LNG) is accelerating. In an LNG-fueled ship whose fuel is LNG, methane slip in which part of methane in the LNG fuel is discharged, remaining unburned, from an engine outlet is a problem. Then, it is being considered to reduce the methane slip by disposing a methane oxidation catalyst in an exhaust passage in which exhaust gas of an engine flows and oxidizing methane on the catalyst.

On the other hand, since a sulfur component contained in lubricating oil or the like inside the engine is mixed into the exhaust gas of the engine, a substance containing sulfur is sometimes adsorbed to the methane oxidation catalyst. The catalytic activity of the methane oxidation catalyst is thereby reduced. In other words, the methane oxidation catalyst is poisoned by sulfur. Then, in Japanese Patent Application Laid Open Gazette No. 2002-349254, disclosed is a method in which a sulfur oxide adsorbent (sulfur adsorption part) is disposed on an upstream side of the methane oxidation catalyst, to thereby suppress the sulfur poisoning of the methane oxidation catalyst. Further, in an exhaust gas purification apparatus disclosed in Japanese Patent Application Laid Open Gazette No. 2009-185763, the sulfur oxide adsorbent (sulfur adsorption part) is disposed on an upstream side of a nitrogen oxide adsorbent, to thereby prevent inflow of sulfur oxide to the nitrogen oxide adsorbent.

Since the adsorption ability of the sulfur adsorption part is reduced when the amount of (substance containing) sulfur adsorbed to the sulfur adsorption part increases, performed is a regeneration process in which high-temperature gas is supplied to the sulfur adsorption part, to thereby desorb sulfur from the sulfur adsorption part. At that time, gas containing highconcentration sulfur flows into a catalyst on a downstream side and sulfur poisoning of the catalyst occurs.

### SUMMARY OF THE INVENTION

The present invention is intended for an exhaust gas treatment apparatus, and it is an object of the present invention to suppress sulfur poisoning of a catalyst in regeneration of a sulfur adsorption part.

A first aspect of the present invention is intended for an exhaust gas treatment apparatus, and the exhaust gas treatment apparatus according to the first aspect includes a sulfur adsorption part provided in an exhaust passage in which exhaust gas discharged from an engine flows, for adsorbing a substance containing sulfur in the exhaust gas, a catalyst part provided on a downstream side of the sulfur adsorption part in the exhaust passage, for oxidizing or reducing a predetermined substance in the exhaust gas, a gas temperature switching part capable of switching between a normal gas inflow state in which the exhaust gas having a normal temperature flows into the sulfur adsorption part and a high-temperature gas inflow state in which the exhaust gas having a temperature higher than the normal temperature flows into the sulfur adsorption part, a catalyst bypass passage provided in the exhaust passage, bypassing a target catalyst included in the catalyst part, a passage switching part capable of switching between a bypass state in which the exhaust gas flows in the catalyst bypass passage and a non-bypass state in which the exhaust gas flows in the target catalyst, and a control part for switching the passage switching part from the non-bypass state to the bypass state in execution of regeneration of the sulfur adsorption part by switching the gas temperature switching part from the normal gas inflow state to the high-temperature gas inflow state.

According to the present invention, it is possible to suppress the sulfur poisoning of the target catalyst in the regeneration of the sulfur adsorption part.

A second aspect of the present invention is intended for the exhaust gas treatment apparatus according to the first aspect, and in the exhaust gas treatment apparatus according to the second aspect, the engine uses gas containing methane as a fuel, and the catalyst part includes a methane oxidation catalyst used for oxidizing methane contained in the exhaust gas.

A third aspect of the present invention is intended for the exhaust gas treatment apparatus according to the second aspect, and in the exhaust gas treatment apparatus according to the third aspect, the target catalyst of the catalyst part includes an SCR catalyst.

A fourth aspect of the present invention is intended for the exhaust gas treatment apparatus according to the third aspect, and the exhaust gas treatment apparatus according to the fourth aspect further includes another catalyst bypass passage provided in the exhaust passage, bypassing the methane oxidation catalyst, and another passage switching part capable of switching between a bypass state in which the exhaust gas flows in another catalyst bypass passage and a non-bypass state in which the exhaust gas flows in the methane oxidation catalyst, and in the exhaust gas treatment apparatus of the fourth aspect, the control part switches another passage switching part from the non-bypass state to the bypass state in execution of regeneration of the sulfur adsorption part.

A fifth aspect of the present invention is intended for the exhaust gas treatment apparatus according to the fourth aspect, and in the exhaust gas treatment apparatus according to the fifth aspect, the control part switches another passage switching part from the bypass state to the non-bypass state while maintaining the gas temperature switching part in the high-temperature gas inflow state after an end of regeneration of the sulfur adsorption part.

A sixth aspect of the present invention is intended for the exhaust gas treatment apparatus according to any one of the second to fifth aspects, and in the exhaust gas treatment apparatus according to the sixth aspect, a turbine of a turbocharger is provided in the exhaust passage, and the methane oxidation catalyst is provided between the engine and the turbine.

A seventh aspect of the present invention is intended for the exhaust gas treatment apparatus according to any one of the first to fifth aspects, and in the exhaust gas treatment apparatus according to the seventh aspect, a turbine of a turbocharger is provided in the exhaust passage, the exhaust gas having passed through the turbine flows into the sulfur adsorption part and the catalyst part when the gas temperature switching part is in the normal gas inflow state, and the exhaust gas taken out from between the engine and the turbine in the exhaust passage flows into the sulfur adsorption part when the gas temperature switching part is in the high-temperature gas inflow state.

An eighth aspect of the present invention is intended for the exhaust gas treatment apparatus according to any one of the first to fifth aspects, and in the exhaust gas treatment apparatus according to the eighth aspect, a turbine of a turbocharger is provided in the exhaust passage, and the sulfur adsorption part is provided between the engine and the turbine.

A ninth aspect of the present invention is intended for the exhaust gas treatment apparatus according to any one of the first to fifth aspects (or any one of the first to eighth aspects), and in the exhaust gas treatment apparatus according to the ninth aspect, the gas temperature switching part heats part of the exhaust gas by using a heater to cause the part of the exhaust gas to flow into the sulfur adsorption part in the high-temperature gas inflow state, and a remainder of the exhaust gas does not pass through the heater and the part of the exhaust gas having passed through the sulfur adsorption part and the remainder of the exhaust gas not having passed through the heater are mixed together to thereby pass through the catalyst bypass passage.

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a view showing a configuration of an engine system in accordance with a first preferred embodiment;
FIG. 2 is a cross-sectional view showing a reaction container;
FIG. 3 is a view used for explaining a regeneration operation in an exhaust gas treatment apparatus;
FIG. 4 is a view showing a configuration of an exhaust gas treatment apparatus in accordance with a second preferred embodiment;
FIG. 5 is a view used for explaining the regeneration operation in the exhaust gas treatment apparatus;
FIG. 6 is a view used for explaining an additional regeneration operation in the exhaust gas treatment apparatus;
FIG. 7 is a view showing a configuration of an exhaust gas treatment apparatus in accordance with a third preferred embodiment;
FIG. 8 is a view used for explaining the regeneration operation in the exhaust gas treatment apparatus;
FIG. 9 is a view showing a configuration of an exhaust gas treatment apparatus in accordance with a fourth preferred embodiment;
FIG. 10 is a view used for explaining the regeneration operation in the exhaust gas treatment apparatus;
FIG. 11 is a view used for explaining the additional regeneration operation in the exhaust gas treatment apparatus;
FIG. 12 is a view showing a configuration of an exhaust gas treatment apparatus in accordance with a fifth preferred embodiment;
FIG. 13 is a view used for explaining the regeneration operation in the exhaust gas treatment apparatus;
FIG. 14 is a view showing a configuration of an exhaust gas treatment apparatus in accordance with a sixth preferred embodiment;
FIG. 15 is a view used for explaining the regeneration operation in the exhaust gas treatment apparatus; and
FIG. 16 is a view used for explaining the additional regeneration operation in the exhaust gas treatment apparatus.

### DESCRIPTION OF EMBODIMENTS

### (The First Preferred Embodiment)

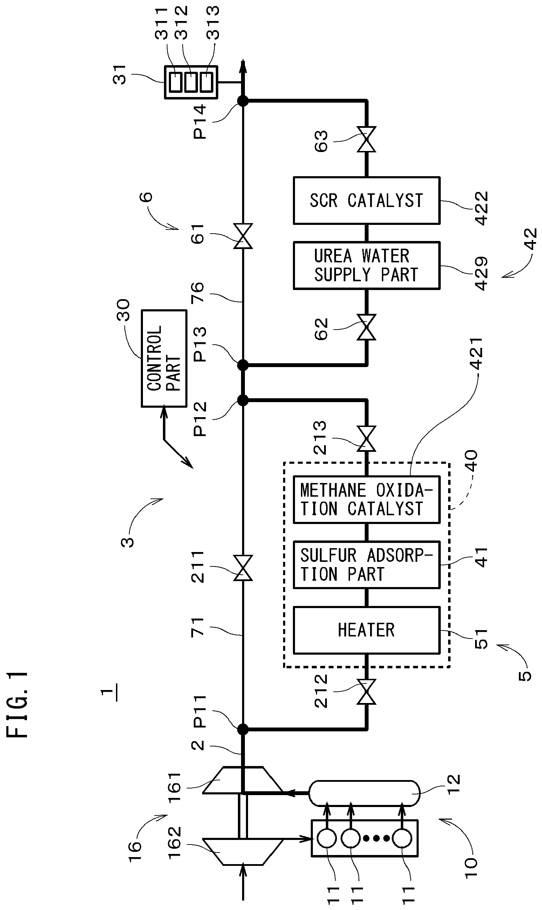

FIG. 1 is a view showing a configuration of an engine system 1 in accordance with the first preferred embodiment of the present invention. The engine system 1 is mounted on, for example, a ship. The engine system 1 includes an engine 10, a turbocharger 16, and an exhaust gas treatment apparatus 3. The engine 10 is a gas engine using gas containing methane (CH₄) as a fuel, and in an exemplary case, the fuel is LNG (liquefied natural gas). The engine 10 may use a fuel other than LNG. The engine 10 is, for example, a four-stroke engine. The engine 10 may be a two-stroke engine or the like.

The engine 10 includes a plurality of cylinders 11 and an exhaust manifold 12. Each cylinder 11 is provided with a piston, and a space surrounded by the cylinder 11 and the piston or the like serves as a combustion chamber for burning the fuel. The turbocharger 16 is a charger and includes a turbine 161 and a compressor 162. In the turbocharger 16, the turbine 161 is rotated by exhaust gas described later. The compressor 162 uses a rotating force generated in the turbine 161 to pressurize and compress intake gas (air) taken from the outside of the engine 10. The pressurized air is supplied to the combustion chamber of each cylinder 11 to be used for combustion of the fuel. The plurality of cylinders 11 are connected to one exhaust manifold 12. The exhaust gases discharged from the plurality of combustion chambers are collected into the exhaust manifold 12. The exhaust gas discharged from the exhaust manifold 12 flows along a later-described exhaust passage 2. In the exhaust passage 2, the above-described turbine 161 is provided and rotated by the exhaust gas.

The exhaust gas treatment apparatus 3 is provided in the exhaust passage 2. The exhaust passage 2 serves as a passage in which the exhaust gas discharged from the engine 10 flows in a later-described normal operation. In FIG. 1, for distinction from any other passage, the exhaust passage 2 is represented by a thick solid line (the same applies to other figures showing the exhaust gas treatment apparatus). The exhaust gas treatment apparatus 3 treats the exhaust gas discharged from the engine 10. In the present preferred embodiment, unburned methane and other hydrocarbon contained in the exhaust gas from the engine 10 are oxidized in the exhaust gas treatment apparatus 3 and decomposed into carbon dioxide (CO₂) and water (H₂O). In the exhaust gas discharged from the engine system 1 to the atmosphere, the concentration of unburned methane is made to be not higher than a predetermined default value. In other words, the methane slip is reduced.

The exhaust gas treatment apparatus 3 includes a control part 30, a sulfur adsorption part 41, a catalyst part 42, a gas temperature switching part 5, a passage switching part 6, a heater bypass passage 71, a catalyst bypass passage 76, and a measurement unit 31. The control part 30 performs a general control of the exhaust gas treatment apparatus 3. The control part 30 may also serves as a control part of the engine 10. The control part 30 is implemented, for example, when a computer having a CPU, a memory, and the like executes a predetermined program. Part of or the whole of the control part 30 may be implemented by a programmable logic controller (PLC) or the like.

The gas temperature switching part 5 has a heater 51. The heater 51 is provided in the exhaust passage 2 and heats the exhaust gas. The heater 51 is, for example, an electric heater, a heat medium heater, or the like, and typically heats the exhaust gas without mixing any other substance such as the fuel or the like into the exhaust gas. As described later, the heater 51 is provided on an upstream side of the sulfur adsorption part 41 and the exhaust gas having passed through the heater 51 flows into the sulfur adsorption part 41. The gas temperature switching part 5 can switch between ON/OFF of the heater 51, to thereby switch between a normal gas inflow state and a high-temperature gas inflow state. In the normal gas inflow state, the exhaust gas which is not heated by the heater 51 to have a normal temperature (e.g., 350 to 450 °C) flows into the sulfur adsorption part 41. In the high-temperature gas inflow state, the exhaust gas which is heated by the heater 51 to have a temperature higher than the normal temperature flows into the sulfur adsorption part 41.

The sulfur adsorption part 41 is provided in the exhaust passage 2. The sulfur adsorption part 41 includes a sulfur adsorbent, and a substance (e.g., sulfur oxide or the like, and hereinafter, referred to as a "sulfur-containing material") containing sulfur in the exhaust gas is adsorbed to the sulfur adsorbent. In the sulfur adsorbent, when a certain amount of sulfur-containing material is adsorbed thereto, the adsorption ability of the sulfur adsorbent for adsorbing the sulfur-containing material is reduced. In a regeneration operation described later, when the gas temperature switching part 5 forms the high-temperature gas inflow state and the temperature of surroundings of the sulfur adsorption part 41 becomes high, the sulfur-containing material adsorbed to the sulfur adsorbent is desorbed therefrom. The ability of the sulfur adsorbent for adsorbing the sulfur-containing material is thereby regenerated. A temperature range in which the sulfur-containing material is adsorbed to the sulfur adsorbent and a temperature range in which the sulfur-containing material is desorbed from the sulfur adsorbent can be changed depending on the material selected for the sulfur adsorbent.

The catalyst part 42 is provided in the exhaust passage 2 and oxidizes or reduces a predetermined substance in the exhaust gas. The catalyst part 42 shown in FIG. 1 has a methane oxidation catalyst 421, a urea water supply part 429, and an SCR catalyst 422. The methane oxidation catalyst 421 is one example of a hydrocarbon decomposition catalyst and oxidizes methane contained in the exhaust gas. As the methane oxidation catalyst 421, various materials are known, and used is a material which is selected as appropriate in accordance with conditions such as the temperature of the exhaust gas and/or the like. The urea water supply part 429 supplies urea water into the exhaust gas. The SCR catalyst 422 causes ammonia generated by thermal decomposition of urea and nitrogen oxide (NOx) contained in the exhaust gas to react each other, to be thereby converted into nitrogen (N₂) and water (H₂O). As the SCR catalyst 422, various materials are known, and used is a material which is selected as appropriate in accordance with conditions such as the temperature of the exhaust gas and/or the like. In the catalyst part 42, a reducing agent other than urea may be used.

In the exhaust passage 2, from the upstream side toward the downstream side (in other words, from the side of the exhaust manifold 12 toward an exhaust port into the atmosphere), the heater 51, the sulfur adsorption part 41, the methane oxidation catalyst 421, the urea water supply part 429, and the SCR catalyst 422 are disposed in this order. In the normal operation in the exhaust gas treatment apparatus 3, the exhaust gas discharged from the engine 10 goes through the heater 51, the sulfur adsorption part 41, the methane oxidation catalyst 421, the urea water supply part 429, and the SCR catalyst 422 in this order. In the exemplary case shown in FIG. 1, the heater 51, the sulfur adsorption part 41, and the methane oxidation catalyst 421 are accommodated in the reaction container 40.

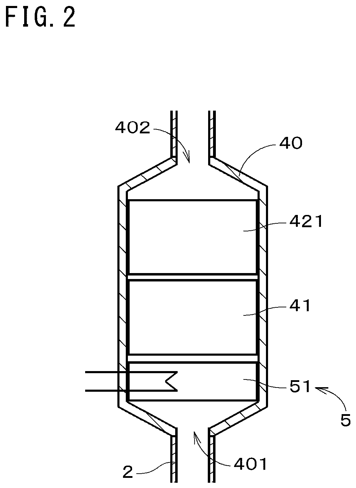

FIG. 2 is a cross-sectional view showing the reaction container 40. The reaction container 40 is, for example, a container in which the inside thereof is sealed except a connecting part with the exhaust passage 2. In the exemplary case shown in FIG. 2, the reaction container 40 has a cylindrical shape extending in a direction along the exhaust passage 2, a rectangular parallelepiped shape having a square cross section, a rectangular parallelepiped shape having a rectangular cross section, or the like, and an inflow port 401 is provided at one end portion in this direction and an outflow port 402 is provided at the other end portion. The inflow port 401 and the outflow port 402 each serve as a connecting part with the exhaust passage 2. The exhaust gas having passed through the turbine 161 shown in FIG. 1 flows into the reaction container 40 from the inflow port 401, passes through the heater 51, the sulfur adsorption part 41, and the methane oxidation catalyst 421 in this order, and is discharged from the outflow port 402 to the outside of the reaction container 40.

The flow passage area inside the reaction container 40 (in other words, a cross-sectional area inside the reaction container 40 perpendicular to a flow direction of the exhaust gas) is sufficiently larger than the flow passage area of the exhaust passage 2. Inside the reaction container 40, the flow velocity of the exhaust gas becomes lower, and heating of the exhaust gas by the heater 51, adsorption of the sulfur-containing material to the sulfur adsorption part 41, and oxidation of methane by the methane oxidation catalyst 421 can be efficiently performed. Further, the pressure loss is also reduced in the heater 51, the sulfur adsorption part 41, and the methane oxidation catalyst 421. At a position opposed to the heater 51, an auxiliary heater for heating the reaction container 40 from the outside may be provided. The heater 51, the sulfur adsorption part 41, and the methane oxidation catalyst 421 may be accommodated in individual containers, respectively, while maintaining the order shown in FIG. 1.

As shown in FIG. 1, the heater bypass passage 71 is so provided in the exhaust passage 2 as to bypass the heater 51, the sulfur adsorption part 41, and the methane oxidation catalyst 421. One end of the heater bypass passage 71 is connected to a connection position P11 between the turbine 161 and the heater 51 in the exhaust passage 2. The other end of the heater bypass passage 71 is connected to a connection position P12 between the methane oxidation catalyst 421 and the urea water supply part 429 in the exhaust passage 2. A valve 211 is provided in the heater bypass passage 71. The valve 211 is, for example, a flow regulating valve, and the control part 30 can adjust the degree of opening of the valve 211, to thereby adjust the flow rate of the exhaust gas flowing in the heater bypass passage 71. In the exhaust passage 2, a valve 212 is provided between the connection position P11 and the heater 51. A valve 213 is provided between the methane oxidation catalyst 421 and the connection position P12. The control part 30 controls the opening/closing of the valves 212 and 213.

The catalyst bypass passage 76 is so provided in the exhaust passage 2 as to bypass the urea water supply part 429 and the SCR catalyst 422. One end of the catalyst bypass passage 76 is connected to a connection position P13 between the connection position P12 and the urea water supply part 429 in the exhaust passage 2. The other end of the catalyst bypass passage 76 is connected to a connection position P14 on the downstream side of the SCR catalyst 422 in the exhaust passage 2. The connection position P14 is a position between the SCR catalyst 422 and a measurement position of the measurement unit 31 described later.

The passage switching part 6 has a plurality of valves 61, 62, and 63. The valve 61 is provided in the catalyst bypass passage 76. The valves 62 and 63 are provided in the exhaust passage 2. In more detail, the valve 62 is disposed between the connection position P13 and the urea water supply part 429, and the valve 63 is disposed between the SCR catalyst 422 and the connection position P14. The passage switching part 6 opens the valve 61 and closes the valves 62 and 63, to thereby form a bypass state in which the exhaust gas does not flow in the urea water supply part 429 or the SCR catalyst 422 but flows in the catalyst bypass passage 76. Further, the passage switching part 6 closes the valve 61 and opens the valves 62 and 63, to thereby form a non-bypass state in which the exhaust gas flows in the urea water supply part 429 and the SCR catalyst 422 and does not flow in the catalyst bypass passage 76. Thus, the passage switching part 6 can switch between the bypass state and the non-bypass state.

The measurement unit 31 measures a state of the exhaust gas on the downstream side of the connection position P14 in the exhaust passage 2. When the exhaust gas treatment apparatus 3 operates, the exhaust gas constantly passes the measurement position of the measurement unit 31. In the exhaust gas treatment apparatus 3 shown in FIG. 1, the measurement unit 31 has a temperature measurement part 311, a methane concentration measurement part 312, and a sulfur concentration measurement part 313. The temperature measurement part 311 measures a temperature of the exhaust gas. The methane concentration measurement part 312 measures a methane concentration in the exhaust gas. The sulfur concentration measurement part 313 measures a sulfur concentration in the exhaust gas. As each of the temperature measurement part 311, the methane concentration measurement part 312, and the sulfur concentration measurement part 313, a commercially available one can be used. Respective measured values of the temperature measurement part 311, the methane concentration measurement part 312, and the sulfur concentration measurement part 313 are outputted to the control part 30. In the measurement unit 31, only any one or any two of the temperature measurement part 311, the methane concentration measurement part 312, and the sulfur concentration measurement part 313 may be provided.

In the normal operation in the exhaust gas treatment apparatus 3, by closing the valves 211 and 61 and opening the other valves 212, 213, 62, and 63, the exhaust gas flows along the exhaust passage 2. At that time, the heater 51 is in an OFF state, and the exhaust gas is not heated. In other words, the gas temperature switching part 5 is in the normal gas inflow state in which the exhaust gas having the normal temperature flows into the sulfur adsorption part 41. The sulfur-containing material contained in the exhaust gas is adsorbed to the sulfur adsorption part 41. It is thereby possible to suppress sulfur poisoning (degradation due to sulfur) of the methane oxidation catalyst 421 and the SCR catalyst 422 disposed on the downstream side of the sulfur adsorption part 41. Further, methane contained in the exhaust gas is oxidized in the methane oxidation catalyst 421. The passage switching part 6 is in the non-bypass state in which the exhaust gas flows in the urea water supply part 429 and the SCR catalyst 422 and does not flow in the catalyst bypass passage 76. In the SCR catalyst 422, nitrogen oxide contained in the exhaust gas is reduced.

In the sulfur concentration measurement part 313, the sulfur concentration in the exhaust gas is constantly measured. When the sulfur concentration measured value obtained by the sulfur concentration measurement part 313 is not smaller than a predetermined regeneration execution threshold value, the control part 30 determines that the ability of the sulfur adsorbent of the sulfur adsorption part 41 for adsorbing the sulfur-containing material is reduced. The regeneration operation for regenerating the sulfur adsorption part 41 is thereby performed. Thus, the control part 30 determines execution of the regeneration of the sulfur adsorption part 41 on the basis of the measured value of the sulfur concentration measurement part 313.

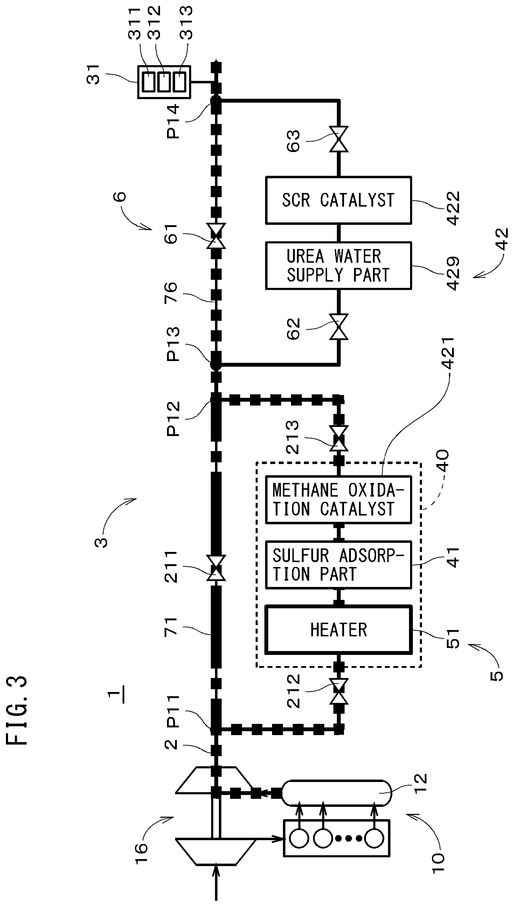

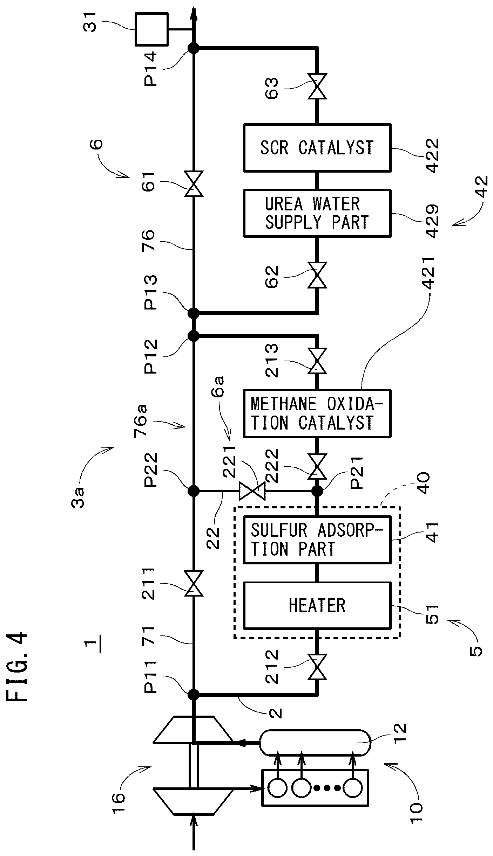

FIG. 3 is a view used for explaining the regeneration operation in the exhaust gas treatment apparatus 3, and a passage in which the exhaust gas flows is represented by a thick broken line and a thick one-dot chain line (the same applies to other figures used for explaining the regeneration operation and a later-described additional regeneration operation). Further, in FIG. 3, the control part 30 is not shown (the same applies to FIGs. 4 to 18 described later). When the regeneration operation is started, the control part 30 gradually opens the valve 211 in the heater bypass passage 71. Furthermore, the gas temperature switching part 5 brings the heater 51 into an ON state, to thereby switch from the normal gas inflow state to the high-temperature gas inflow state. In FIG. 3. an outer edge of a block indicating the heater 51 is represented by a thick line and this shows that the heater 51 is in the ON state (the same applies to other figures showing the exhaust gas treatment apparatus).

At the connection position P11, part of the exhaust gas flows toward the heater 51 and then is heated by the heater 51 to flow into the sulfur adsorption part 41 (see the thick broken line in FIG. 3). The temperature of surroundings of the sulfur adsorption part 41 thereby becomes high, and the sulfur-containing material adsorbed to the sulfur adsorption part 41 is desorbed therefrom. In the regeneration operation, the temperature of the exhaust gas flowing into the sulfur adsorption part 41 is, for example, not lower than 500 °C, preferably not lower than 550 °C, and more preferably not lower than 580 °C. Since the high-temperature exhaust gas flows in the passage from the heater 51 to the connection position P12, the passage is formed of a material having a high heat-resistant temperature, such as stainless steel or the like. An upper limit of the temperature of the exhaust gas flowing into the sulfur adsorption part 41 is the upper limit of the heat-resistant temperature of the material used for the passage. The exhaust gas containing the sulfur-containing material desorbed from the sulfur adsorption part 41 passes through the methane oxidation catalyst 421 and flows to the connection position P12. At that time, since the exhaust gas has a high temperature, the sulfur-containing material adsorbed to the methane oxidation catalyst 421 is also desorbed therefrom.

At the connection position P11, the remainder of the exhaust gas flows into the heater bypass passage 71 and flows to the connection position P12 (see the thick one-dot chain line in FIG. 3). At the connection position P12, the exhaust gas having passed through the heater 51, the sulfur adsorption part 41, and the methane oxidation catalyst 421 and the exhaust gas having passed through the heater bypass passage 71 are mixed together. Thus, the connection position P12 is a mixed position where the high-temperature exhaust gas having passed through the heater 51 and the normal-temperature exhaust gas not having passed through the heater 51 are mixed together. In the present preferred embodiment, hereinafter, the connection position P12 is sometimes referred to as a "mixed position P12".

The mixed position P12 in the exhaust passage 2 is located immediately after the methane oxidation catalyst 421. Herein, "the mixed position P12 is immediately after the methane oxidation catalyst" means that a constituent element (a catalyst, a heater, or the like) for changing the state of the exhaust gas, such as a composition, a temperature, and/or the like, is not provided between the methane oxidation catalyst 421 and the mixed position P12. The distance of the passage between the methane oxidation catalyst 421 and the mixed position P12 is preferably shorter than the heater bypass passage 71. The distance may be not shorter than the length of the heater bypass passage 71. The temperature of the exhaust gas after the mixture at the mixed position P12 is not higher than a predetermined limiting temperature. The limiting temperature is lower than the temperature of the exhaust gas having passed through the heater 51, for example, 450 °C, and preferably 430 °C. It is thereby possible to use a cheap material (for example, carbon steel or the like) having a relatively low heat-resistant temperature for the passage on the downstream side relative to the mixed position P12.

In the exhaust gas treatment apparatus 3, the temperature of the exhaust gas is constantly measured by the temperature measurement part 311. A temperature measured value obtained by the temperature measurement part 311 is the temperature of the exhaust gas after the mixture at the mixed position P12. The control part 30 controls the degree of opening of the valve 211 in the heater bypass passage 71 on the basis of the measured value so as to cause the measured value of the temperature measurement part 311 to be not higher than the limiting temperature. In a case, for example, where a set temperature lower than the limiting temperature is set in advance and the measured value of the temperature measurement part 311 is higher than the set temperature, the degree of opening of the valve 211 in the heater bypass passage 71 is made high. When this measured value is lower than the set temperature, the degree of opening of the valve 211 is made low. Thus, the control part 30 adjusts a ratio between the flow rate of the exhaust gas flowing into the heater 51 from the connection position P11 and the flow rate of the exhaust gas flowing into the heater bypass passage 71 from the connection position P11 (in other words, a mixing ratio at the mixed position P12) on the basis of the measured value of the temperature measurement part 311. It is thereby possible to make the temperature of the exhaust gas after the mixture at the mixed position P12 substantially constant at the set temperature.

In a case where the flow rate, the temperature, or the like of the exhaust gas discharged from the engine 10 is substantially constant, the degree of opening of the valve 211 may be constant in the regeneration operation. Depending on the design of the exhaust passage 2, by fully opening the valve 211 in the regeneration operation and controlling the degree of opening of the valve 212 or 213, the mixing ratio at the mixed position P12 may be adjusted.

Further, in the regeneration operation, by the control of the control part 30, the passage switching part 6 opens the valve 61 and closes the valves 62 and 63. The bypass state is thereby formed, in which the exhaust gas does not flow in the urea water supply part 429 or the SCR catalyst 422 but flows in the catalyst bypass passage 76. Herein, the exhaust gas after the mixture at the mixed position P12 contains the sulfur-containing material at a high concentration. If the exhaust gas flows in the SCR catalyst 422, deposition of acidic ammonium sulfate (NH₄HSO₄) or ammonium sulfate ((NH₄)₂SO₄) occurs on the SCR catalyst 422. As a result, the catalytic activity of the SCR catalyst 422 is reduced. In other words, the SCR catalyst 422 is poisoned by sulfur.

In the exhaust gas treatment apparatus 3 shown in FIG. 3, actually, the bypass state is formed in the passage switching part 6, and the exhaust gas does not flow in the urea water supply part 429 or the SCR catalyst 422 but flows in the catalyst bypass passage 76. It is thereby possible to prevent the sulfur poisoning of the SCR catalyst 422, which occurs in the case where the exhaust gas containing the sulfur-containing material at a high concentration flows in the SCR catalyst 422. In the exhaust gas treatment apparatus 3, the SCR catalyst 422 serves as a catalyst (in other words, a target catalyst) which is a target to be prevented from being poisoned by sulfur in the regeneration operation. In the exhaust gas treatment apparatus 3, it is also possible to suppress performance degradation from being caused when sintering occurs due to heat and pores are thereby closed in the SCR catalyst 422.

The exhaust gas containing the sulfur-containing material is discharged into the atmosphere. When there is a regulation on the sulfur concentration in the exhaust gas to be discharged into the atmosphere, it is preferable that the degree of opening of the valve 211 in the heater bypass passage 71 should be controlled on the basis of the measured value of the sulfur concentration measurement part 313. In this case, the mixing ratio at the mixed position P12 is adjusted so that the measured value of the sulfur concentration measurement part 313 (in other words, the sulfur concentration in the exhaust gas to be discharged into the atmosphere) should be not higher than a regulation value while maintaining the measured value of the temperature measurement part 311 not higher than the limiting temperature.

When the measured value of the sulfur concentration measurement part 313 becomes not higher than a predetermined regeneration end threshold value, the control part 30 determines that the ability of the sulfur adsorbent of the sulfur adsorption part 41 for adsorbing the sulfur-containing material is recovered. Thus, the control part 30 determines an end of the regeneration of the sulfur adsorption part 41 on the basis of the measured value of the sulfur concentration measurement part 313. After that, the valve 211 in the heater bypass passage 71 is gradually closed. Further, the gas temperature switching part 5 brings the heater 51 into the OFF state, to thereby switch from the high-temperature gas inflow state to the normal gas inflow state. Furthermore, the passage switching part 6 closes the valve 61 and opens the valves 62 and 63, to thereby form the non-bypass state in which the exhaust gas does not flow in the catalyst bypass passage 76 but flows in the urea water supply part 429 and the SCR catalyst 422. In the exhaust gas treatment apparatus 3, the regeneration operation is thereby ended and the normal operation is restarted.

Execution of the regeneration of the sulfur adsorption part 41 can be determined on the basis of the methane concentration measured value of the methane concentration measurement part 312. In this case, for example, a methane removal rate in the methane oxidation catalyst 421 is calculated. Specifically, by performing an experiment or the like in advance, a relation between a load of the engine 10 and the methane concentration of the exhaust gas discharged from the engine 10 in this load (for example, a table in which the methane concentration is mapped for the load) is acquired. Further, in a case where master data indicating the above-described relation in the engine of the same model is prepared, the master data may be used.

In the control part 30, from the current load of the engine 10, the methane concentration of the exhaust gas flowing into the exhaust passage 2, i.e., the methane concentration at an inlet of the exhaust gas treatment apparatus 3 is specified. In the methane concentration measurement part 312, the methane concentration in the exhaust gas having passed through the methane oxidation catalyst 421, i.e., the methane concentration at an outlet of the exhaust gas treatment apparatus 3 is constantly measured. In the control part 30, for example, a ratio of a value obtained by subtracting the methane concentration at the outlet of the exhaust gas treatment apparatus 3 from that at the inlet thereof, to the methane concentration at the inlet thereof is calculated as the methane removal rate. When the methane removal rate becomes not higher than a predetermined threshold value, the control part 30 determines that the catalytic activity of the methane oxidation catalyst 421 is reduced, and the regeneration operation is performed. The reduction in the catalytic activity of the methane oxidation catalyst 421 is caused by occurrence of the sulfur poisoning in the methane oxidation catalyst 421 due to the reduction in the ability of the sulfur adsorption part 41 for adsorbing the sulfur-containing material. The end of the regeneration of the sulfur adsorption part 41 may be determined on the basis of the measured value of the sulfur concentration measurement part 313 or may be determined on the basis of the execution time (run duration) of the regeneration operation, or the like.

Further, execution of the regeneration of the sulfur adsorption part 41 may be determined on the basis of time for continuing the normal operation by the exhaust gas treatment apparatus 3, i.e., the cumulative time while the exhaust gas passes through the sulfur adsorption part 41 without performing the regeneration operation. The cumulative time used for determining that the regeneration of the sulfur adsorption part 41 should be performed is determined in advance on the basis of the past operation data, the experiment, or the like.

As described above, the exhaust gas treatment apparatus 3 shown in FIG. 1 from one viewpoint includes the sulfur adsorption part 41 which is provided in the exhaust passage 2 and adsorbs a substance containing sulfur in the exhaust gas, the heater 51 which is capable of heating the exhaust gas flowing into the sulfur adsorption part 41, the heater bypass passage 71 which bypasses the heater 51 and the sulfur adsorption part 41, and the control part 30 which heats part of the exhaust gas by using the heater 51 to cause the part of the exhaust gas to flow into the sulfur adsorption part 41 and causes the remainder of the exhaust gas to flow into the heater bypass passage 71 in the regeneration of the sulfur adsorption part 41. In the regeneration of the sulfur adsorption part 41, at the mixed position P12 on the downstream side of the sulfur adsorption part 41 in the passage in which the part of the exhaust gas flows, the part of the exhaust gas having passed through the sulfur adsorption part 41 and the remainder of the exhaust gas having passed through the heater bypass passage 71 are mixed together. It is thereby possible to lower the temperature of the gas flowing on the downstream side relative to the mixed position P12 in the regeneration of the sulfur adsorption part 41 and use a cheap material on the downstream side relative to the mixed position P12. As a result, it is possible to reduce the manufacturing cost of the exhaust gas treatment apparatus 3.

Preferably, the temperature of the exhaust gas flowing into the sulfur adsorption part 41 in the regeneration of the sulfur adsorption part 41 is not lower than 500 °C. It is thereby possible to appropriately regenerate the sulfur adsorption part 41 by using the high-temperature exhaust gas. Though an expensive material is needed in the passage in which the gas having a high temperature not lower than 500 °C flows, it is possible to use a relatively cheap material in another passage in the exhaust gas treatment apparatus 3 by limiting the passage in which the high-temperature gas flows to between the heater 51 and the mixed position P12.

Preferably, the temperature of the exhaust gas after the mixture at the mixed position P12 is not higher than 450 °C. In the exhaust gas treatment apparatus 3 thus, it is possible to use a cheaper material on the downstream side relative to the mixed position P12.

Preferably, the engine 10 uses gas containing methane as a fuel. The exhaust gas treatment apparatus 3 further includes the methane oxidation catalyst 421 which is provided on the downstream side of the sulfur adsorption part 41 in the exhaust passage 2 and oxidizes methane contained in the exhaust gas. It is thereby possible to reduce the methane slip. Further, the mixed position P12 is located immediately after the methane oxidation catalyst 421, and it is thereby possible to also regenerate the methane oxidation catalyst 421 in the regeneration of the sulfur adsorption part 41. Furthermore, it is possible to shorten the length of the passage in which the high-temperature gas flows and reduce the amount of usage of an expensive material.

Preferably, the exhaust gas treatment apparatus 3 includes the methane concentration measurement part 312 which is provided on the downstream side of the methane oxidation catalyst 421 in the exhaust passage 2 and measures the methane concentration in the exhaust gas. The control part 30 determines execution of the regeneration of the sulfur adsorption part 41 on the basis of the measured value of the methane concentration measurement part 312. It is thereby possible to perform the regeneration operation for regenerating the sulfur adsorption part 41 at an appropriate timing.

Preferably, the exhaust gas treatment apparatus 3 includes the sulfur concentration measurement part 313 which is provided on the downstream side of the sulfur adsorption part 41 in the exhaust passage 2 and measures the sulfur concentration in the exhaust gas. The control part 30 determines the execution of the regeneration of the sulfur adsorption part 41 and the end of the regeneration of the sulfur adsorption part 41 on the basis of the measured value of the sulfur concentration measurement part 313. It is thereby possible to perform the regeneration operation at an appropriate timing and finish the regeneration operation at an appropriate timing. In the exhaust gas treatment apparatus 3, only either the execution of the regeneration of the sulfur adsorption part 41 or the end of the regeneration of the sulfur adsorption part 41 may be determined on the basis of the measured value of the sulfur concentration measurement part 313.

Preferably, the exhaust gas treatment apparatus 3 includes the temperature measurement part 311 which is provided on the downstream side of the mixed position P12 and measures the temperature of the exhaust gas. The control part 30 adjusts the flow rate ratio between the above-described part of the exhaust gas passing through the sulfur adsorption part 41 and the above-described remainder of the exhaust gas passing through the heater bypass passage 71 on the basis of the measured value of the temperature measurement part 311. It is thereby possible to appropriately adjust the temperature of the exhaust gas after the mixture at the mixed position P12.

The exhaust gas treatment apparatus 3 shown in FIG. 1 from another viewpoint includes the sulfur adsorption part 41 which is provided in the exhaust passage 2 and adsorbs a substance containing sulfur in the exhaust gas, the catalyst part 42 which is provided on the downstream side of the sulfur adsorption part 41 in the exhaust passage 2 and oxidizes or reduces a predetermined substance in the exhaust gas, and the catalyst bypass passage 76 which is provided in the exhaust passage 2 and bypasses the target catalyst included in the catalyst part 42 (the SCR catalyst 422 in FIG. 1). The exhaust gas treatment apparatus 3 further includes the gas temperature switching part 5, the passage switching part 6, and the control part 30. The gas temperature switching part 5 can switch between the normal gas inflow state in which the exhaust gas having the normal temperature flows into the sulfur adsorption part 41 and the high-temperature gas inflow state in which the exhaust gas having a temperature higher than the normal temperature flows into the sulfur adsorption part 41. The passage switching part 6 can switch between the bypass state in which the exhaust gas flows in the catalyst bypass passage 76 and the non-bypass state in which the exhaust gas flows in the target catalyst. When the control part 30 switches the gas temperature switching part 5 from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst in the regeneration of the sulfur adsorption part 41.

Preferably, the engine 10 uses gas containing methane as a fuel, and the catalyst part 42 includes the methane oxidation catalyst 421 which oxidizes methane contained in the exhaust gas. It is thereby possible to reduce the methane slip. In this case, the target catalyst of the catalyst part 42 includes the SCR catalyst 422, to thereby suppress the sulfur poisoning of the SCR catalyst 422 in the regeneration of the sulfur adsorption part 41.

Preferably, the gas temperature switching part 5 heats the part of the exhaust gas by using the heater 51 to cause the part of the exhaust gas to flow into the sulfur adsorption part 41 in the high-temperature gas inflow state. The remainder of the exhaust gas does not pass through the heater 51, and the part of the exhaust gas having passed through the sulfur adsorption part 41 and the remainder of the exhaust gas not having passed through the heater 51 are mixed together, to thereby pass through the catalyst bypass passage 76. It is thereby possible to lower the temperature of the gas flowing on the downstream side relative to the mixed position P12 in the regeneration of the sulfur adsorption part 41 and use a cheap material on the downstream side relative to mixed position P12. As a result, it is possible to reduce the manufacturing cost of the exhaust gas treatment apparatus 3.

### (The Second Preferred Embodiment)

FIG. 4 is a view showing a configuration of an exhaust gas treatment apparatus 3a in accordance with the second preferred embodiment of the present invention. The exhaust gas treatment apparatus 3a shown in FIG. 4 is different from the exhaust gas treatment apparatus 3 shown in FIG. 1 in that only the heater 51 and the sulfur adsorption part 41 are accommodated in the reaction container 40 and the methane oxidation catalyst 421 is accommodated in another individual container. Further, an auxiliary passage 22 and valves 221 and 222 are added. Other constituent elements are identical to those in the exhaust gas treatment apparatus 3 shown in FIG. 1 and represented by the same reference signs. Furthermore, the heater 51 and the sulfur adsorption part 41 may be accommodated in individual containers, respectively, while maintaining the order shown in FIG. 4.

One end of the auxiliary passage 22 is connected to a connection position P21 between the sulfur adsorption part 41 and the methane oxidation catalyst 421 in the exhaust passage 2 (see the thick solid line in FIG. 4). The other end of the auxiliary passage 22 is connected to a connection position P22 between the valve 211 and a connection position P12 in the heater bypass passage 71. The valve 221 is provided in the auxiliary passage 22. The valve 222 is provided between the connection position P21 and the methane oxidation catalyst 421 in the exhaust passage 2. In the exhaust gas treatment apparatus 3a, another catalyst bypass passage 76a which bypasses the methane oxidation catalyst 421 is constituted of the auxiliary passage 22 and a portion between the connection position P22 and the connection position P12 in the heater bypass passage 71. Further, another passage switching part 6a is constituted of the valves 221, 222, and 213. The passage switching part 6a opens the valve 221 and closes the valves 222 and 213, to be thereby brought into the bypass state in which the exhaust gas flowing to the connection position P21 does not flow in the methane oxidation catalyst 421 but flows in the catalyst bypass passage 76a. Furthermore, the passage switching part 6 closes the valve 221 and opens the valves 222 and 213, to be thereby brought into the non-bypass state in which the exhaust gas flowing to the connection position P21 flows in the methane oxidation catalyst 421 and does not flow in the catalyst bypass passage 76a.

In the normal operation in the exhaust gas treatment apparatus 3a, by closing the valves 211, 221, and 61 and opening the other valves 212, 222, 213, 62, and 63, the exhaust gas flows along the exhaust passage 2. At that time, the heater 51 is in the OFF state and the exhaust gas is not heated. In other words, the gas temperature switching part 5 is in the normal gas inflow state in which the exhaust gas having the normal temperature flows into the sulfur adsorption part 41. The sulfur-containing material contained in the exhaust gas is adsorbed to the sulfur adsorption part 41. The passage switching part 6a is in the non-bypass state in which the exhaust gas flows in the methane oxidation catalyst 421 and does not flow in the catalyst bypass passage 76a. In the methane oxidation catalyst 421, methane contained in the exhaust gas is oxidized. The passage switching part 6 is in the non-bypass state in which the exhaust gas flows in the urea water supply part 429 and the SCR catalyst 422 and does not flow in the catalyst bypass passage 76. In the SCR catalyst 422, nitrogen oxide contained in the exhaust gas is reduced. The control part 30 determines execution of the regeneration of the sulfur adsorption part 41 on the basis of the measured value of the sulfur concentration measurement part 313 in the measurement unit 31, the measured value of the methane concentration measurement part 312, or the like.

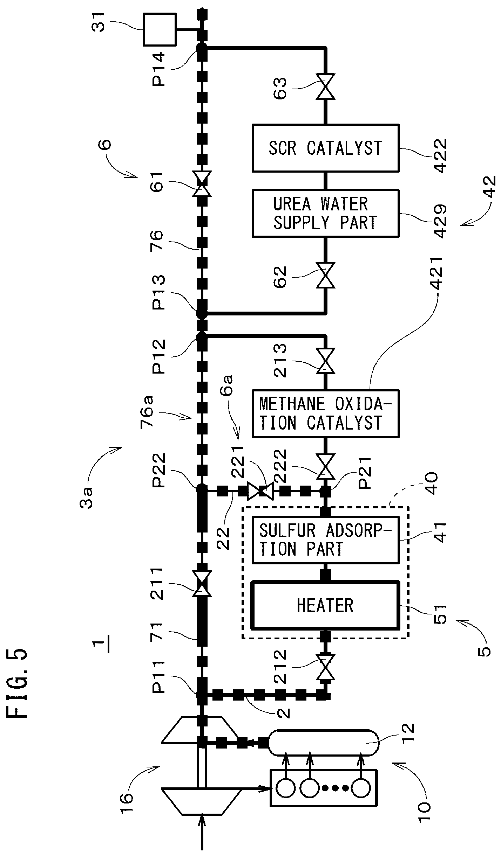

FIG. 5 is a view used for explaining the regeneration operation in the exhaust gas treatment apparatus 3a. In the regeneration operation in the exhaust gas treatment apparatus 3a, by the control of the control part 30, the passage switching part 6a opens the valve 221 in the auxiliary passage 22 and closes the valves 222 and 213. The bypass state is thereby formed, in which the exhaust gas does not flow in the methane oxidation catalyst 421 but flows in the catalyst bypass passage 76a. Further, the valve 211 in the heater bypass passage 71 is gradually opened. Furthermore, the gas temperature switching part 5 brings the heater 51 into the ON state, to thereby switch from the normal gas inflow state to the high-temperature gas inflow state.

At the connection position P11, part of the exhaust gas flows toward the heater 51 (see the thick broken line in FIG. 5) and the remainder of the exhaust gas flows into the heater bypass passage 71 (see the thick one-dot chain line in FIG. 5). The exhaust gas having passed through the heater 51 flows into the sulfur adsorption part 41. The sulfur-containing material adsorbed to the sulfur adsorption part 41 is thereby desorbed therefrom. The exhaust gas having passed through the sulfur adsorption part 41 goes through the connection position P21 and toward the connection position P22 and is mixed with the exhaust gas on the way through the heater bypass passage 71. Thus, the connection position P22 is the mixed position where the high-temperature exhaust gas having passed through the heater 51 and the exhaust gas not having passed through the heater 51 are mixed together. The temperature of the exhaust gas after the mixture at the mixed position P22 becomes not higher than the limiting temperature. The exhaust gas after the mixture passes through a portion between the connection position P22 and the connection position P12 in the heater bypass passage 71.

As described earlier, in the exhaust gas treatment apparatus 3a, the passage switching part 6a is in the bypass state and the high-temperature exhaust gas having passed through the heater 51 does not flow in the methane oxidation catalyst 421. It is thereby possible to prevent the sulfur poisoning of the methane oxidation catalyst 421 due to the exhaust gas containing the sulfur-containing material at a high concentration. Further, in the regeneration operation, the passage switching part 6 opens the valve 61 and closes the valves 62 and 63. The bypass state is thereby formed, in which the exhaust gas having passed through the connection position P12 does not flow in the urea water supply part 429 or the SCR catalyst 422 but flows in the catalyst bypass passage 76. As a result, it is possible to prevent the sulfur poisoning of the SCR catalyst 422 due to the exhaust gas containing the sulfur-containing material at a high concentration.

When the control part 30 determines an end of the regeneration of the sulfur adsorption part 41 on the basis of the measured value of the sulfur concentration measurement part 313, the execution time of the regeneration operation, or the like, the valves 222 and 213 are opened and the valve 221 in the auxiliary passage 22 is closed. The regeneration operation for regenerating the methane oxidation catalyst 421 is thereby performed. In the following description, for distinction from the regeneration operation for regenerating the sulfur adsorption part 41, the regeneration operation for regenerating the methane oxidation catalyst 421 is referred to as an "additional regeneration operation".

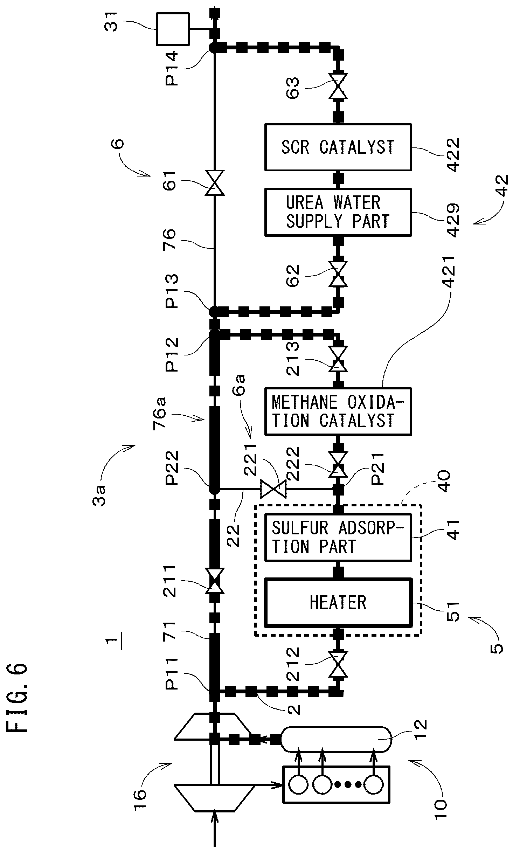

FIG. 6 is a view used for explaining the additional regeneration operation in the exhaust gas treatment apparatus 3a. In the additional regeneration operation, the high-temperature exhaust gas having passed through the heater 51 and the sulfur adsorption part 41 goes through the methane oxidation catalyst 421 (see the thick broken line in FIG. 6), and the sulfur-containing material adsorbed to the methane oxidation catalyst 421 is desorbed therefrom. In the additional regeneration operation, the temperature of the exhaust gas heated by the heater 51 may be different from the heated temperature in the regeneration operation for regenerating the sulfur adsorption part 41. As one exemplary case, the heated temperature of the exhaust gas in the additional regeneration operation is lower than that in the regeneration operation. In the exhaust gas treatment apparatus 3a, the regeneration of the sulfur adsorption part 41 and the regeneration of the methane oxidation catalyst 421 can be performed on individual temperature conditions appropriate thereto, respectively. The exhaust gas having passed through the methane oxidation catalyst 421 goes toward the connection position P12, and is mixed with the exhaust gas having passed through the heater bypass passage 71 (see the thick one-dot chain line in FIG. 6). Thus, the connection position P12 is the mixed position where the high-temperature exhaust gas having passed through the heater 51 and the exhaust gas not having passed through the heater 51 are mixed together. The temperature of the exhaust gas after the mixture at the mixed position P12 becomes not higher than the limiting temperature.

Further, in the additional regeneration operation, the passage switching part 6 closes the valve 61 and opens the valves 62 and 63. The non-bypass state is thereby formed, in which the exhaust gas having passed through the connection position P12 does not flow in the catalyst bypass passage 76 but flows in the urea water supply part 429 and the SCR catalyst 422. Since the amount of adsorbed sulfur-containing material is small in the methane oxidation catalyst 421, the concentration of the sulfur-containing material contained in the exhaust gas is sufficiently low. Therefore, in the SCR catalyst 422, reduction in the catalytic activity due to the deposition of acidic ammonium sulfate or ammonium sulfate does not occur and nitrogen oxide is reduced. Further, depending on the amount of sulfur-containing material adsorbed to the methane oxidation catalyst 421, or the like, in the additional regeneration operation, the passage switching part 6 may maintain in the bypass state. It is thereby possible to more reliably prevent the sulfur poisoning of the SCR catalyst 422.

When the control part 30 determines an end of the additional regeneration operation on the basis of the measured value of the sulfur concentration measurement part 313 (for example, in a case where the measured value is not higher than a predetermined threshold value), the execution time of the additional regeneration operation, or the like, the valve 211 in the heater bypass passage 71 is gradually closed. Further, the gas temperature switching part 5 brings the heater 51 into the OFF state, to thereby switch from the high-temperature gas inflow state to the normal gas inflow state. In the exhaust gas treatment apparatus 3a, the additional regeneration operation is thereby ended and the normal operation is restarted.

In a case where the sulfur poisoning of the methane oxidation catalyst 421 can be sufficiently suppressed by the sulfur adsorption part 41, the additional regeneration operation may be omitted. Depending on the temperature of the exhaust gas heated by the heater 51, there is a possibility that performance degradation may be caused when sintering occurs due to heat and pores are thereby closed in the methane oxidation catalyst 421. When the additional regeneration operation is omitted (in other words, when only the regeneration operation for regenerating the sulfur adsorption part 41 is performed), it is possible to prevent degradation due to the sintering of the methane oxidation catalyst 421.

As described above, in the exhaust gas treatment apparatus 3a, in the regeneration of the sulfur adsorption part 41, the exhaust gas having passed through the sulfur adsorption part 41 and the exhaust gas having passed through the heater bypass passage (a portion between the connection position P11 and the mixed position P22 in the heater bypass passage 71 in FIG. 5) are mixed together at the mixed position P22 on the downstream side of the sulfur adsorption part 41. When the regeneration operation (additional regeneration operation) of the methane oxidation catalyst 421 is omitted, it is thereby possible to use a cheap material on the downstream side relative to the mixed position P22. Further, since the mixed position P22 is located immediately after the sulfur adsorption part 41, it is possible to shorten the length of the passage in which the high-temperature gas flows and reduce the amount of usage of an expensive material. When the additional regeneration operation is performed, it is possible to use a cheap material on the downstream side relative to the mixed position P12 in the regeneration of the methane oxidation catalyst 421.

Further, when the control part 30 switches the gas temperature switching part 5 from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst (the SCR catalyst 422 in FIG. 5) in the regeneration of the sulfur adsorption part 41.

The exhaust gas treatment apparatus 3a further includes another catalyst bypass passage 76a and another passage switching part 6a. The catalyst bypass passage 76a is provided in the exhaust passage 2 and bypasses the methane oxidation catalyst 421. The passage switching part 6a can switch between the bypass state in which the exhaust gas flows in the catalyst bypass passage 76a and the non-bypass state in which the exhaust gas flows in the methane oxidation catalyst 421. In execution of the regeneration of the sulfur adsorption part 41, the control part 30 switches the passage switching part 6a from the non-bypass state to the bypass state. It is thereby possible to suppress the sulfur poisoning of the methane oxidation catalyst 421 in the regeneration of the sulfur adsorption part 41.

In the exhaust gas treatment apparatus 3a, the control part 30 switches the passage switching part 6a from the bypass state to the non-bypass state while maintaining the gas temperature switching part 5 in the high-temperature gas inflow state after the end of the regeneration of the sulfur adsorption part 41. It is thereby possible to efficiently regenerate the methane oxidation catalyst 421 continuously from the regeneration of the sulfur adsorption part 41.

### (The Third Preferred Embodiment)

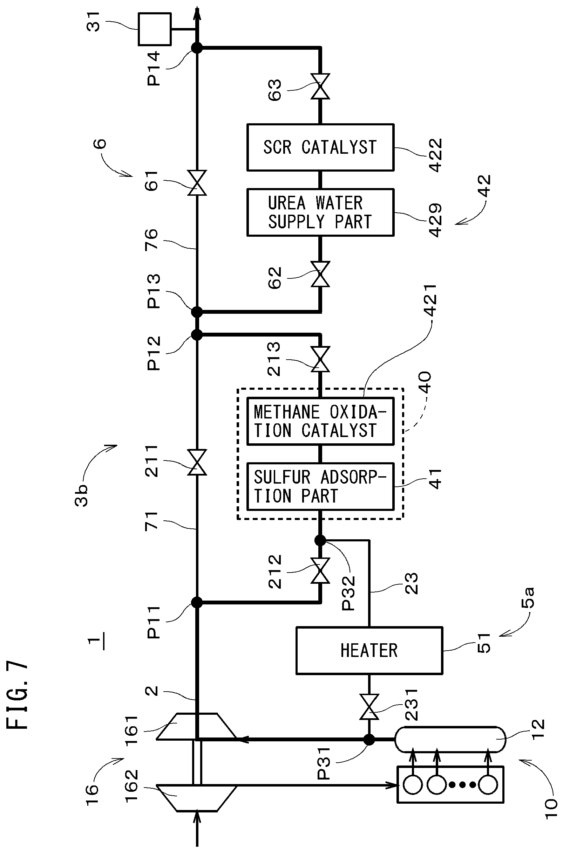

FIG. 7 is a view showing a configuration of an exhaust gas treatment apparatus 3b in accordance with the third preferred embodiment of the present invention. The exhaust gas treatment apparatus 3b shown in FIG. 7 is different from the exhaust gas treatment apparatus 3 shown in FIG. 1 in that only the sulfur adsorption part 41 and the methane oxidation catalyst 421 are accommodated in the reaction container 40. Further, an auxiliary passage 23 is added, and the heater 51 and a valve 231 are provided in the auxiliary passage 23. Other constituent elements are identical to those in the exhaust gas treatment apparatus 3 shown in FIG. 1 and represented by the same reference signs. Furthermore, the sulfur adsorption part 41 and the methane oxidation catalyst 421 may be accommodated in individual containers, respectively, while maintaining the order shown in FIG. 7.

One end of the auxiliary passage 23 is connected to a connection position P31 between the exhaust manifold 12 and the turbine 161 in the exhaust passage 2 (see the thick solid line in FIG. 7). The other end of the auxiliary passage 23 is connected to a connection position P32 between the valve 212 and the sulfur adsorption part 41 in the exhaust passage 2. The valve 231 is provided on an upstream side of the heater 51 in the auxiliary passage 23. In the exhaust gas treatment apparatus 3b, a gas temperature switching part 5a is constituted of the valve 231 and the heater 51. As described later, the gas temperature switching part 5a closes the valve 231 and brings the heater 51 into the OFF state, to thereby form the normal gas inflow state in which the exhaust gas flows along the exhaust passage 2 and the exhaust gas having the normal temperature flows into the sulfur adsorption part 41. By opening the valve 231 and bringing the heater 51 into the ON state, formed is the high-temperature gas inflow state in which part of the exhaust gas flows in the auxiliary passage 23 and the exhaust gas having a temperature higher than the normal temperature flows into the sulfur adsorption part 41.

In the normal operation in the exhaust gas treatment apparatus 3b, by closing the valves 231, 211, and 61 and opening the other valves 212, 213, 62, and 63, the exhaust gas flows along the exhaust passage 2. At that time, the exhaust gas does not flows into the heater 51 and the heater 51 is in the OFF state. In other words, the gas temperature switching part 5a is in the normal gas inflow state in which the exhaust gas having the normal temperature flows into the sulfur adsorption part 41. The sulfur-containing material contained in the exhaust gas is adsorbed to the sulfur adsorption part 41. In the methane oxidation catalyst 421, methane contained in the exhaust gas is oxidized. Further, the passage switching part 6 is in the non-bypass state in which the exhaust gas flows in the urea water supply part 429 and the SCR catalyst 422 and does not flow in the catalyst bypass passage 76. In the SCR catalyst 422, nitrogen oxide contained in the exhaust gas is reduced. The control part 30 determines execution of the regeneration of the sulfur adsorption part 41 on the basis of the measured value of the sulfur concentration measurement part 313 in the measurement unit 31, the measured value of the methane concentration measurement part 312, or the like.

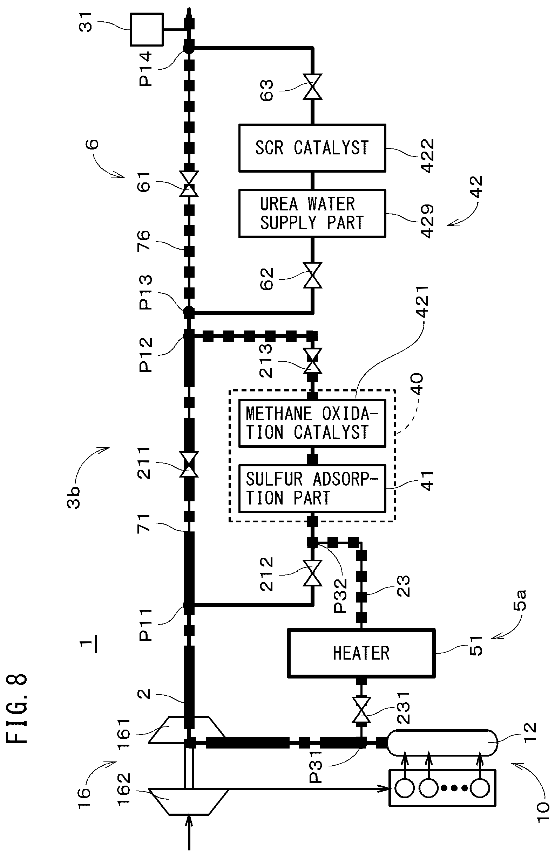

FIG. 8 is a view used for explaining the regeneration operation in the exhaust gas treatment apparatus 3b. In the regeneration operation in the exhaust gas treatment apparatus 3b, the valve 211 in the heater bypass passage 71 is gradually opened and the valve 212 is closed. Further, the gas temperature switching part 5a opens the valve 231 and brings the heater 51 into the ON state, to thereby switch from the normal gas inflow state to the high-temperature gas inflow state.

At the connection position P31, part of the exhaust gas discharged from the engine 10 flows into the auxiliary passage 23 and flows toward the heater 51 (see the thick broken line in FIG. 8). The exhaust gas flowing in the heater 51 is gas (so-called bleed air) not having passed through the turbine 161, in which neither the pressure nor the temperature is reduced. Further, the remainder of the exhaust gas passes through the turbine 161 and the connection position P11 and then flows into the heater bypass passage 71 (see the thick one-dot chain line in FIG. 8). The exhaust gas having passed through the heater 51 passes through the connection position P32, the sulfur adsorption part 41, and the methane oxidation catalyst 421. The sulfur-containing material adsorbed to the sulfur adsorption part 41 and the methane oxidation catalyst 421 is thereby desorbed therefrom. The exhaust gas having passed through the methane oxidation catalyst 421 goes toward the connection position P12 and is mixed with the exhaust gas having passed through the heater bypass passage 71. Thus, the connection position P12 is the mixed position where the high-temperature exhaust gas having passed through the heater 51 and the exhaust gas not having passed through the heater 51 are mixed together. The temperature of the exhaust gas after the mixture at the mixed position P12 becomes not higher than the limiting temperature.

Further, in the regeneration operation, the passage switching part 6 opens the valve 61 and closes the valves 62 and 63. The bypass state is thereby formed, in which the exhaust gas having passed through the connection position P12 does not flow in the urea water supply part 429 or the SCR catalyst 422 but flows in catalyst bypass passage 76. As a result, it is possible to prevent the sulfur poisoning of the SCR catalyst 422 due to the exhaust gas containing the sulfur-containing material at a high concentration.

When the control part 30 determines an end of the regeneration operation on the basis of the measured value of the sulfur concentration measurement part 313, the execution time of the regeneration operation, or the like, the valve 211 in the heater bypass passage 71 is gradually closed and the valve 212 is opened. Further, the gas temperature switching part 5a closes the valve 231 and brings the heater 51 into the OFF state, to thereby switch from the high-temperature gas inflow state to the normal gas inflow state. Furthermore, the passage switching part 6 closes the valve 61 and opens the valves 62 and 63, to thereby switch from the bypass state to the non-bypass state. Thus, in the exhaust gas treatment apparatus 3b, the regeneration operation is ended and the normal operation is restarted.

As described above, in the exhaust gas treatment apparatus 3b, in the regeneration of the sulfur adsorption part 41, the exhaust gas having passed through the sulfur adsorption part 41 and the exhaust gas having passed through the heater bypass passage (a portion between the connection position P31 and the connection position P11 in the exhaust passage 2 and the heater bypass passage 71 in FIG. 8) are mixed together at the mixed position P12 on the downstream side of the sulfur adsorption part 41. It is thereby possible to use a cheap material on the downstream side relative to the mixed position P12 and reduce the manufacturing cost of the exhaust gas treatment apparatus 3b.

Further, when the control part 30 switches the gas temperature switching part 5a from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst (the SCR catalyst 422 in FIG. 8) in the regeneration of the sulfur adsorption part 41.

In the exhaust gas treatment apparatus 3b, the turbine 161 of the turbocharger 16 is provided in the exhaust passage 2. When the gas temperature switching part 5a is in the normal gas inflow state, the exhaust gas having passed through the turbine 161 flows into the sulfur adsorption part 41 and the catalyst part 42. When the gas temperature switching part 5a is in the high-temperature gas inflow state (in other words, in regeneration of the sulfur adsorption part 41), the exhaust gas taken out from between the engine 10 and the turbine 161 in the exhaust passage 2 is heated by the heater 51 to flow into the sulfur adsorption part 41. Thus, by using the high-temperature exhaust gas discharged from the engine 10 and not having passed through the turbine 161 for the regeneration of the sulfur adsorption part 41, it is possible to reduce consumption energy in the heater 51.

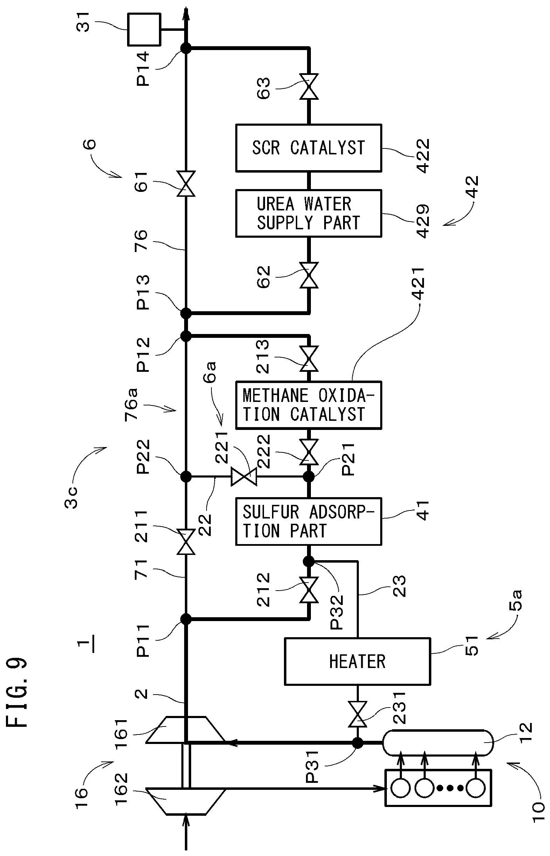

Further, when the temperature of the exhaust gas (bleed air) taken out from the auxiliary passage 23 is sufficiently high in the regeneration operation, the heater 51 may be omitted. It is thereby possible to save the space of the exhaust gas treatment apparatus 3b inside a ship and effectively use the energy. Furthermore, heating of the exhaust gas by the heater 51 may be performed only supplementarily (as necessary). Further, when the temperature of the exhaust gas taken out from the auxiliary passage 23 is too high, by opening the valve 212 shown in FIG. 8 and adjusting the degree of opening, it is also possible to mix the above exhaust gas with the exhaust gas having passed through the turbine 161 to thereby cause the exhaust gas whose temperature is lowered to some degree to flow into the sulfur adsorption part 41. The same applies in an exhaust gas treatment apparatus 3c shown in FIG. 9 described later.

### (The Fourth Preferred Embodiment)

FIG. 9 is a view showing a configuration of an exhaust gas treatment apparatus 3c in accordance with the fourth preferred embodiment of the present invention. The exhaust gas treatment apparatus 3c shown in FIG. 4 is different from the exhaust gas treatment apparatus 3b shown in FIG. 7 in that the sulfur adsorption part 41 and the methane oxidation catalyst 421 are accommodated in individual containers, respectively. Further, like in the exhaust gas treatment apparatus 3a shown in FIG. 4, the auxiliary passage 22 and the valves 221 and 222 are added. Other constituent elements are identical to those in the exhaust gas treatment apparatus 3b shown in FIG. 7 and represented by the same reference signs.

One end of the auxiliary passage 22 is connected to the connection position P21 between the sulfur adsorption part 41 and the methane oxidation catalyst 421 in the exhaust passage 2 (see the thick solid line in FIG. 9). The other end of the auxiliary passage 22 is connected to the connection position P22 between the valve 211 and the connection position P12 in the heater bypass passage 71. The valve 221 is provided in the auxiliary passage 22. The valve 222 is provided between the connection position P21 and the methane oxidation catalyst 421 in the exhaust passage 2. In the exhaust gas treatment apparatus 3c, another catalyst bypass passage 76a which bypasses the methane oxidation catalyst 421 is constituted of the auxiliary passage 22 and a portion between the connection position P22 and the connection position P12 in the heater bypass passage 71. Further, another passage switching part 6a is constituted of the valves 221, 222, and 213. The passage switching part 6a opens the valve 221 and closes the valves 222 and 213, to be thereby brought into the bypass state in which the exhaust gas flowing to the connection position P21 does not flow in the methane oxidation catalyst 421 but flows in the catalyst bypass passage 76a. Furthermore, the passage switching part 6a closes the valve 221 and opens the valves 222 and 213, to be thereby brought into the non-bypass state in which the exhaust gas flowing to the connection position P21 flows in the methane oxidation catalyst 421 and does not flow in the catalyst bypass passage 76a.

In the normal operation in the exhaust gas treatment apparatus 3c, by closing the valves 231, 211, 221, and 61 and opening the other valves 212, 222, 213, 62, and 63, the exhaust gas flows along the exhaust passage 2. At that time, the exhaust gas does not flow into the heater 51 and the heater 51 is in the OFF state. In other words, the gas temperature switching part 5a is in the normal gas inflow state in which the exhaust gas having the normal temperature flows into the sulfur adsorption part 41. Further, the passage switching part 6a is in the non-bypass state in which the exhaust gas flows in the methane oxidation catalyst 421 and does not flow in the catalyst bypass passage 76a. The passage switching part 6 is in the non-bypass state in which the exhaust gas flows in the urea water supply part 429 and the SCR catalyst 422 and does not flow in the catalyst bypass passage 76. The control part 30 determines execution of the regeneration of the sulfur adsorption part 41 on the basis of the measured value of the sulfur concentration measurement part 313 in the measurement unit 31, the measured value of the methane concentration measurement part 312, or the like.

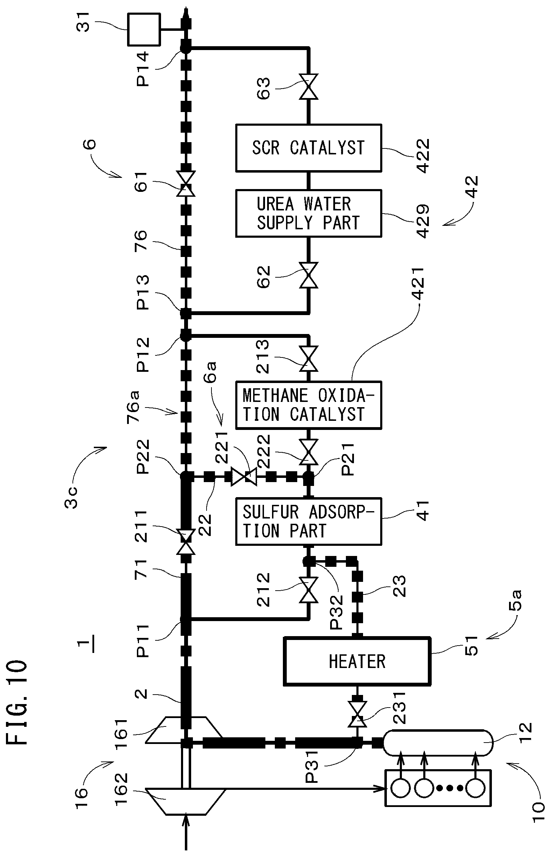

FIG. 10 is a view used for explaining the regeneration operation in the exhaust gas treatment apparatus 3c. In the regeneration operation in the exhaust gas treatment apparatus 3c, the valve 211 in the heater bypass passage 71 is gradually opened and the valve 212 is closed. Further, the gas temperature switching part 5a opens the valve 231 and brings the heater 51 into the ON state, to thereby switch from the normal gas inflow state to the high-temperature gas inflow state. Furthermore, the passage switching part 6a opens the valve 221 in the auxiliary passage 22 and closes the valves 222 and 213, to thereby form the bypass state in which the exhaust gas does not flow in the methane oxidation catalyst 421 but flows in the catalyst bypass passage 76a.

At the connection position P31, part of the exhaust gas discharged from the engine 10 flows toward the heater 51 (see the thick broken line in FIG. 10). The remainder of the exhaust gas goes through the turbine 161 and the connection position P11 and then flows into the heater bypass passage 71 (see the thick one-dot chain line in FIG. 10). The exhaust gas having passed through the heater 51 flows into the sulfur adsorption part 41 through the connection position P32. The sulfur-containing material adsorbed to the sulfur adsorption part 41 is thereby desorbed therefrom. The exhaust gas having passed through the sulfur adsorption part 41 goes through the connection position P21 and toward the connection position P22 and is mixed with the exhaust gas on the way through the heater bypass passage 71. Thus, the connection position P22 is the mixed position where the high-temperature exhaust gas having passed through the heater 51 and the exhaust gas not having passed through the heater 51 are mixed together. The temperature of the exhaust gas after the mixture at the mixed position P22 becomes not higher than the limiting temperature. The exhaust gas after the mixture passes through a portion between the connection position P22 and the connection position P12 in the heater bypass passage 71.

As described above, in the exhaust gas treatment apparatus 3c, the passage switching part 6a is in the bypass state and the high-temperature exhaust gas having passed through the heater 51 does not flow in the methane oxidation catalyst 421. It is thereby possible to prevent the sulfur poisoning of the methane oxidation catalyst 421 due to the exhaust gas containing the sulfur-containing material at a high concentration. Further, in the regeneration operation, the passage switching part 6 opens the valve 61 and closes the valves 62 and 63. The bypass state is thereby formed, in which the exhaust gas having passed through the connection position P12 does not flow in the urea water supply part 429 or the SCR catalyst 422 but flows in the catalyst bypass passage 76. As a result, it is possible to prevent the sulfur poisoning of the SCR catalyst 422 due to the exhaust gas containing the sulfur-containing material at a high concentration.

When the control part 30 determines an end of the regeneration of the sulfur adsorption part 41 on the basis of the measured value of the sulfur concentration measurement part 313, the execution time of the regeneration operation, or the like, the valves 222 and 213 are opened and the valve 221 in the auxiliary passage 22 is closed. The additional regeneration operation for regenerating the methane oxidation catalyst 421 is thereby performed.

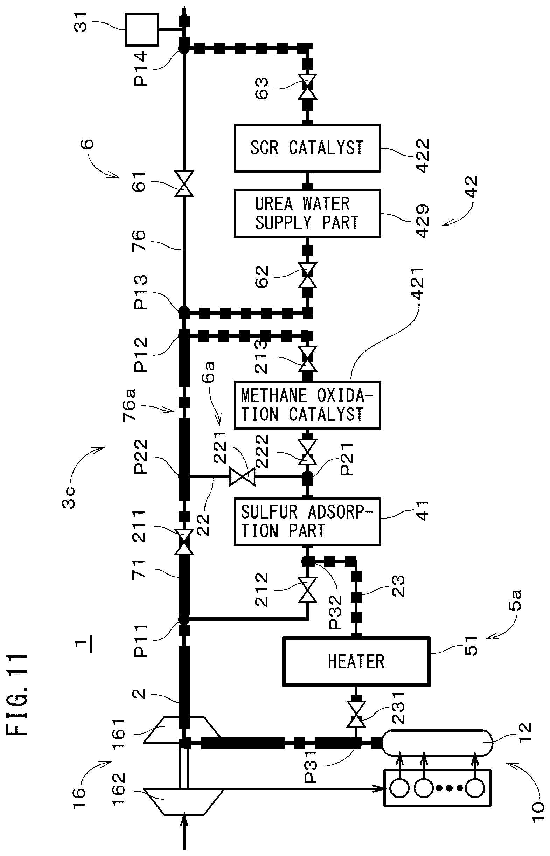

FIG. 11 is a view used for explaining the additional regeneration operation in the exhaust gas treatment apparatus 3c. In the additional regeneration operation, the high-temperature exhaust gas having passed through the heater 51 and the sulfur adsorption part 41 goes through the methane oxidation catalyst 421 (see the thick broken line in FIG. 11), and the sulfur-containing material adsorbed to the methane oxidation catalyst 421 is desorbed therefrom. In the additional regeneration operation, the temperature of the exhaust gas heated by the heater 51 may be different from the heated temperature in the regeneration operation for regenerating the sulfur adsorption part 41. In the exhaust gas treatment apparatus 3c, the regeneration of the sulfur adsorption part 41 and the regeneration of the methane oxidation catalyst 421 can be performed on individual temperature conditions appropriate thereto, respectively. The exhaust gas having passed through the methane oxidation catalyst 421 goes toward the connection position P12, and is mixed with the exhaust gas having passed through the heater bypass passage 71 (see the thick one-dot chain line in FIG. 11). Thus, the connection position P12 is the mixed position where the high-temperature exhaust gas having passed through the heater 51 and the exhaust gas not having passed through the heater 51 are mixed together. The temperature of the exhaust gas after the mixture at the mixed position P12 becomes not higher than the limiting temperature.

Further, in the additional regeneration operation, the passage switching part 6 closes the valve 61 and opens the valves 62 and 63. The non-bypass state is thereby formed, in which the exhaust gas having passed through the connection position P12 does not flow in the catalyst bypass passage 76 but flows in the urea water supply part 429 and the SCR catalyst 422. Since the amount of adsorbed sulfur-containing material is small in the methane oxidation catalyst 421, the concentration of the sulfur-containing material contained in the exhaust gas is sufficiently low. Therefore, in the SCR catalyst 422, reduction in the catalytic activity due to the deposition of acidic ammonium sulfate or ammonium sulfate does not occur and nitrogen oxide is reduced. Further, depending on the amount of sulfur-containing material adsorbed to the methane oxidation catalyst 421, or the like, in the additional regeneration operation, the passage switching part 6 may maintain in the bypass state. It is thereby possible to more reliably prevent the sulfur poisoning of the SCR catalyst 422.

When the control part 30 determines an end of the additional regeneration operation on the basis of the measured value of the sulfur concentration measurement part 313, the execution time of the additional regeneration operation, or the like, the valve 211 in the heater bypass passage 71 is gradually closed and the valve 212 is opened. Further, the gas temperature switching part 5a closes the valve 231 and brings the heater 51 into the OFF state, to thereby switch from the high-temperature gas inflow state to the normal gas inflow state. In the exhaust gas treatment apparatus 3c, the regeneration operation is thereby ended and the normal operation is restarted.

Like in the exhaust gas treatment apparatus 3a shown in FIG. 4, in the case where the sulfur poisoning of the methane oxidation catalyst 421 can be sufficiently suppressed by the sulfur adsorption part 41, the additional regeneration operation may be omitted. Depending on the temperature of the exhaust gas in the high-temperature gas inflow state, there is a possibility that degradation due to sintering by the heat may be caused in the methane oxidation catalyst 421. When the additional regeneration operation is omitted (in other words, when only the regeneration operation for regenerating the sulfur adsorption part 41 is performed), it is possible to prevent the degradation due to the sintering of the methane oxidation catalyst 421.

As described above, in the exhaust gas treatment apparatus 3c, in the regeneration of the sulfur adsorption part 41, the exhaust gas having passed through the sulfur adsorption part 41 and the exhaust gas having passed through the heater bypass passage (a portion between the connection position P31 and the connection position P11 in the exhaust passage 2 and a portion between the connection position P11 and the mixed position P22 in the heater bypass passage 71 in FIG. 10) are mixed together at the mixed position P22 on the downstream side of the sulfur adsorption part 41. When the additional regeneration operation is omitted, it is thereby possible to use a cheap material on the downstream side relative to the mixed position P22. When the additional regeneration operation is performed, it is possible to use a cheap material on the downstream side relative to the mixed position P12 in the regeneration of the methane oxidation catalyst 421.

Further, when the control part 30 switches the gas temperature switching part 5a from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst (the SCR catalyst 422 in FIG. 10) in the regeneration of the sulfur adsorption part 41.

In the exhaust gas treatment apparatus 3c, the exhaust gas taken out from between the engine 10 and the turbine 161 in the exhaust passage 2 in the regeneration of the sulfur adsorption part 41 is heated by the heater 51 to flow into the sulfur adsorption part 41. Thus, by using the high-temperature exhaust gas discharged from the engine 10 and not having passed through the turbine 161 for the regeneration of the sulfur adsorption part 41, it is possible to reduce consumption energy in the heater 51.

The exhaust gas treatment apparatus 3c further includes another catalyst bypass passage 76a and another passage switching part 6a. The catalyst bypass passage 76a is provided in the exhaust passage 2 and bypasses the methane oxidation catalyst 421. The passage switching part 6a can switch between the bypass state in which the exhaust gas flows in the catalyst bypass passage 76a and the non-bypass state in which the exhaust gas flows in the methane oxidation catalyst 421. In execution of the regeneration of the sulfur adsorption part 41, the control part 30 switches the passage switching part 6a from the non-bypass state to the bypass state. It is thereby possible to suppress the sulfur poisoning of the methane oxidation catalyst 421 in the regeneration of the sulfur adsorption part 41.

### (The Fifth Preferred Embodiment)

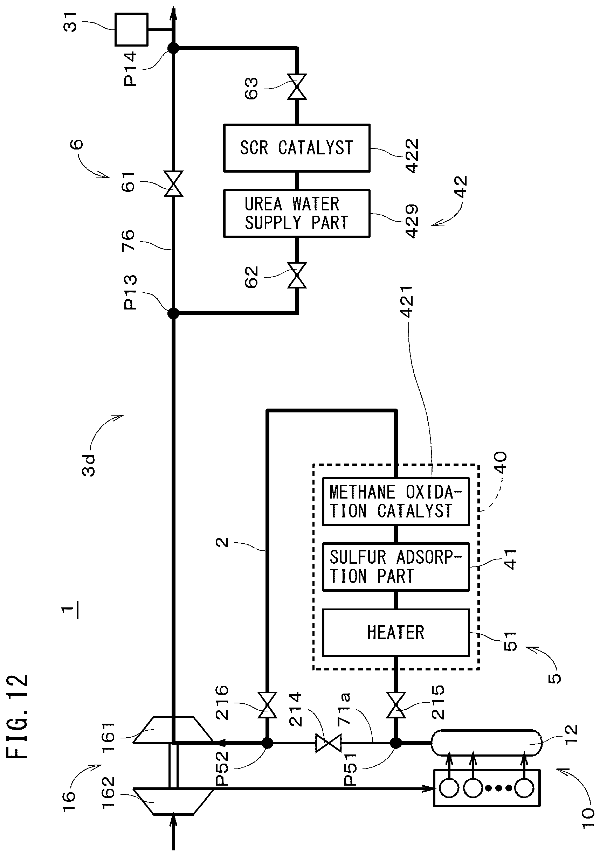

FIG. 12 is a view showing a configuration of an exhaust gas treatment apparatus 3d in accordance with the fifth preferred embodiment of the present invention. The exhaust gas treatment apparatus 3d shown in FIG. 12 is different from the exhaust gas treatment apparatus 3 shown in FIG. 1 in that the heater 51, the sulfur adsorption part 41, the methane oxidation catalyst 421, and a heater bypass passage 71a are provided between the engine 10 and the turbine 161 in the exhaust passage 2 (see the thick solid line in FIG. 12). Other constituent elements are identical to those in the exhaust gas treatment apparatus 3 shown in FIG. 1 and represented by the same reference signs. Further, though the heater 51, the sulfur adsorption part 41, and the methane oxidation catalyst 421 are accommodated in one reaction container 40 in FIG. 12, the heater 51, the sulfur adsorption part 41, and the methane oxidation catalyst 421 may be accommodated in individual containers, respectively, while maintaining the order shown in FIG. 12.

In the exhaust gas treatment apparatus 3d, the heater 51, the sulfur adsorption part 41, and the methane oxidation catalyst 421 are disposed in this order from the exhaust manifold 12 toward the turbine 161 in the exhaust passage 2. One end of the heater bypass passage 71a is connected to a connection position P51 between the exhaust manifold 12 and the heater 51 in the exhaust passage 2. The other end of the heater bypass passage 71a is connected to a connection position P52 between the methane oxidation catalyst 421 and the turbine 161 in the exhaust passage 2. A valve 214 is provided in the heater bypass passage 71a. The valve 214 is, for example, a flow regulating valve, and the control part 30 can adjust the degree of opening of the valve 214, to thereby adjust the flow rate of the exhaust gas flowing in the heater bypass passage 71a. In the exhaust passage 2, a valve 215 is provided between the connection position P51 and the heater 51, and a valve 216 is provided between the methane oxidation catalyst 421 and the connection position P52. The control part 30 controls the opening/closing of the valves 215 and 216.

In the normal operation in the exhaust gas treatment apparatus 3d, by closing the valves 214 and 61 and opening the other valves 215, 216, 62, and 63, the exhaust gas flows along the exhaust passage 2. At that time, the heater 51 is in the OFF state. In other words, the gas temperature switching part 5 is in the normal gas inflow state in which the exhaust gas having the normal temperature flows into the sulfur adsorption part 41. The sulfur-containing material contained in the exhaust gas is adsorbed to the sulfur adsorption part 41. In the methane oxidation catalyst 421, methane contained in the exhaust gas is oxidized. The exhaust gas having passed through the methane oxidation catalyst 421 goes through the connection position P52 and the turbine 161 and toward the connection position P13. The passage switching part 6 is in the non-bypass state in which the exhaust gas flows in the urea water supply part 429 and the SCR catalyst 422. In the SCR catalyst 422, nitrogen oxide contained in the exhaust gas is reduced. The control part 30 determines execution of the regeneration of the sulfur adsorption part 41 on the basis of the measured value of the sulfur concentration measurement part 313 in the measurement unit 31, the measured value of the methane concentration measurement part 312, or the like.

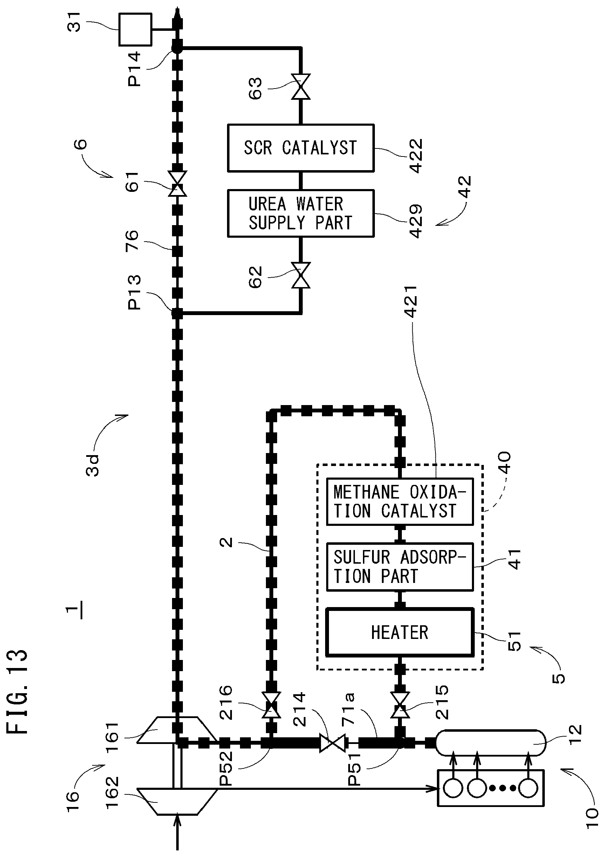

FIG. 13 is a view used for explaining the regeneration operation in the exhaust gas treatment apparatus 3d. In the regeneration operation in the exhaust gas treatment apparatus 3d, the valve 214 in the heater bypass passage 71a is gradually opened. Further, the gas temperature switching part 5 brings the heater 51 into the ON state, to thereby switch from the normal gas inflow state to the high-temperature gas inflow state.

At the connection position P51, part of the exhaust gas flows toward the heater 51 (see the thick broken line in FIG. 13) and the remainder of the exhaust gas flows into the heater bypass passage 71a (see the thick one-dot chain line in FIG. 13). The exhaust gas having passed through the heater 51 flows into the sulfur adsorption part 41 and the methane oxidation catalyst 421. The sulfur-containing material adsorbed to the sulfur adsorption part 41 and the methane oxidation catalyst 421 is thereby desorbed therefrom. The exhaust gas having passed through the methane oxidation catalyst 421 goes toward the connection position P52 and is mixed with the exhaust gas having passed through the heater bypass passage 71a. Thus, the connection position P52 is the mixed position where the high-temperature exhaust gas having passed through the heater 51 and the exhaust gas not having passed through the heater 51 are mixed together. The temperature of the exhaust gas after the mixture at the mixed position P52 becomes not higher than the limiting temperature. The exhaust gas after the mixture goes through the turbine 161 and toward the connection position P13.

In the regeneration operation, the passage switching part 6 opens the valve 61 and closes the valves 62 and 63. The bypass state is thereby formed, in which the exhaust gas reaching the connection position P13 does not flow in the urea water supply part 429 or the SCR catalyst 422 but flows in the catalyst bypass passage 76. As a result, it is thereby possible to prevent the sulfur poisoning of the SCR catalyst 422 due to the exhaust gas containing the sulfur-containing material at a high concentration.

When the control part 30 determines an end of the regeneration operation on the basis of the measured value of the sulfur concentration measurement part 313, the execution time of the regeneration operation, or the like, the valve 214 in the heater bypass passage 71a is gradually closed. Further, the gas temperature switching part 5 brings the heater 51 into the OFF state, to thereby switch from the high-temperature gas inflow state to the normal gas inflow state. Furthermore, the passage switching part 6 closes the valve 61 and opens the valves 62 and 63, to thereby switch from the bypass state to the non-bypass state. Thus, in the exhaust gas treatment apparatus 3d, the regeneration operation is ended and the normal operation is restarted.

As described above, in the exhaust gas treatment apparatus 3d, in the regeneration of the sulfur adsorption part 41, the exhaust gas having passed through the sulfur adsorption part 41 and the exhaust gas having passed through the heater bypass passage 71a are mixed together at the mixed position P52 on the downstream side of the sulfur adsorption part 41. It is thereby possible to use a cheap material on the downstream side relative to the mixed position P52 and reduce the manufacturing cost of the exhaust gas treatment apparatus 3d.

Further, when the control part 30 switches the gas temperature switching part 5 from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst (the SCR catalyst 422 in FIG. 13) in the regeneration of the sulfur adsorption part 41.

In the exhaust gas treatment apparatus 3d, the turbine 161 of the turbocharger 16 is provided in the exhaust passage 2, and the methane oxidation catalyst 421 is provided between the engine 10 and the turbine 161. Thus, by disposing the methane oxidation catalyst 421 in highpressure exhaust gas, it is possible to increase the activity of the methane oxidation catalyst 421 and thereby efficiently oxidize methane in the exhaust gas. Further, by providing the sulfur adsorption part 41 between the engine 10 and the turbine 161 in the exhaust passage 2, it is possible to suppress the reduction in the activity of the methane oxidation catalyst 421 and the SCR catalyst 422 and additionally suppress sulfuric acid corrosion of blades and deposition of sulfur-derived sediments on the blades and the inside of a casing in the turbine 161.

### (The Sixth Preferred Embodiment)

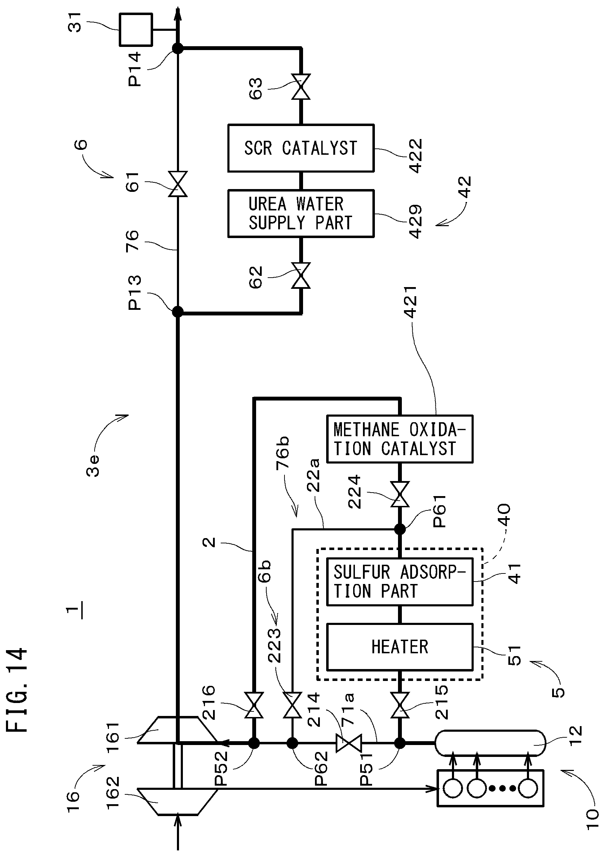

FIG. 14 is a view showing a configuration of an exhaust gas treatment apparatus 3e in accordance with the sixth preferred embodiment of the present invention. The exhaust gas treatment apparatus 3e shown in FIG. 14 is different from the exhaust gas treatment apparatus 3d shown in FIG. 12 in that only the heater 51 and the sulfur adsorption part 41 are accommodated in the reaction container 40 and the methane oxidation catalyst 421 is accommodated in another individual container. Further, an auxiliary passage 22a and valves 223 and 224 are added. Other constituent elements are identical to those in the exhaust gas treatment apparatus 3d shown in FIG. 12 and represented by the same reference signs. Furthermore, the heater 51 and the sulfur adsorption part 41 may be accommodated in individual containers, respectively, while maintaining the order shown in FIG. 14.

One end of the auxiliary passage 22a is connected to a connection position P61 between the sulfur adsorption part 41 and the methane oxidation catalyst 421 in the exhaust passage 2 (see the thick solid line in FIG. 14). The other end of the auxiliary passage 22a is connected to a connection position P62 between the valve 214 and the connection position P52 in the heater bypass passage 71a. The valve 223 is provided in the auxiliary passage 22a. The valve 224 is provided between the connection position P61 and the methane oxidation catalyst 421 in the exhaust passage 2. In the exhaust gas treatment apparatus 3e, still another catalyst bypass passage 76b which bypasses the methane oxidation catalyst 421 is constituted of the auxiliary passage 22a and a portion between the connection position P62 and the connection position P52 in the heater bypass passage 71a. Further, still another passage switching part 6b is constituted of the valves 223, 224, and 216. The passage switching part 6b opens the valve 223 and closes the valves 224 and 216, to be thereby brought into the bypass state in which the exhaust gas flowing to the connection position P61 does not flow in the methane oxidation catalyst 421 but flows in the catalyst bypass passage 76b. Furthermore, the passage switching part 6b closes the valve 223 and opens the valves 224 and 216, to be thereby brought into the non-bypass state in which the exhaust gas flowing to the connection position P61 flows in the methane oxidation catalyst 421 and does not flow in the catalyst bypass passage 76b.

In the normal operation in the exhaust gas treatment apparatus 3e, by closing the valves 214, 223, and 61 and opening the other valves 215, 224, 216, 62, and 63, the exhaust gas flows along the exhaust passage 2. At that time, the heater 51 is in the OFF state and the exhaust gas is not heated. In other words, the gas temperature switching part 5 is in the normal gas inflow state in which the exhaust gas having the normal temperature flows into the sulfur adsorption part 41. The sulfur-containing material contained in the exhaust gas is adsorbed to the sulfur adsorption part 41. The passage switching part 6b is in the non-bypass state in which the exhaust gas flows in the methane oxidation catalyst 421 and does not flow in the catalyst bypass passage 76b. In the methane oxidation catalyst 421, methane contained in the exhaust gas is oxidized. The exhaust gas having passed through the methane oxidation catalyst 421 goes through the connection position P52 and the turbine 161 and toward the connection position P13. The passage switching part 6 is in the non-bypass state in which the exhaust gas flows in the urea water supply part 429 and the SCR catalyst 422 and does not flow in the catalyst bypass passage 76. In the SCR catalyst 422, nitrogen oxide contained in the exhaust gas is reduced. The control part 30 determines execution of the regeneration of the sulfur adsorption part 41 on the basis of the measured value of the sulfur concentration measurement part 313 in the measurement unit 31, the measured value of the methane concentration measurement part 312, or the like.

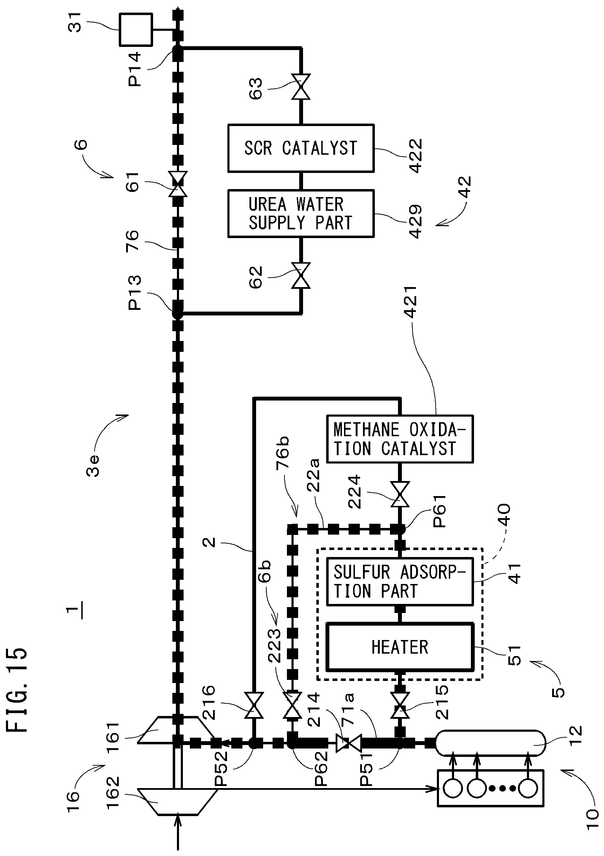

FIG. 15 is a view used for explaining the regeneration operation in the exhaust gas treatment apparatus 3e. In the regeneration operation in the exhaust gas treatment apparatus 3e, the passage switching part 6b opens the valve 223 of the auxiliary passage 22a and closes the valves 224 and 216. The bypass state is thereby formed, in which the exhaust gas does not flow in the methane oxidation catalyst 421 but flows in the catalyst bypass passage 76b. Further, the valve 214 of the heater bypass passage 71a is gradually opened. Furthermore, the gas temperature switching part 5 brings the heater 51 into the ON state, to thereby switch from the normal gas inflow state to the high-temperature gas inflow state.

At the connection position P51, part of the exhaust gas flows toward the heater 51 (see the thick broken line in FIG. 15) and the remainder of the exhaust gas flows into the heater bypass passage 71a (see the thick one-dot chain line in FIG. 15). The exhaust gas having passed through the heater 51 flows into the sulfur adsorption part 41. The sulfur-containing material adsorbed to the sulfur adsorption part 41 is thereby desorbed therefrom. The exhaust gas having passed through the sulfur adsorption part 41 goes through the connection position P61 and toward the connection position P62 and is mixed with the exhaust gas on the way through the heater bypass passage 71a. Thus, the connection position P62 is the mixed position where the high-temperature exhaust gas having passed through the heater 51 and the exhaust gas not having passed through the heater 51 are mixed together. The temperature of the exhaust gas after the mixture at the mixed position P62 becomes not higher than the limiting temperature. The exhaust gas after the mixture passes through a portion between the connection position P62 and the connection position P52 in the heater bypass passage 71a.

As described earlier, in the exhaust gas treatment apparatus 3e, the passage switching part 6b is in the bypass state and the high-temperature exhaust gas having passed through the heater 51 does not flow in the methane oxidation catalyst 421. It is thereby possible to prevent the sulfur poisoning of the methane oxidation catalyst 421 due to the exhaust gas containing the sulfur-containing material at a high concentration. The exhaust gas having passed through the connection position P52 goes through the turbine 161 and toward the connection position P13. In the regeneration operation, the passage switching part 6 opens the valve 61 and closes the valves 62 and 63. The bypass state is thereby formed, in which the exhaust gas having passed through the connection position P52 does not flow in the urea water supply part 429 or the SCR catalyst 422 but flows in the catalyst bypass passage 76. As a result, it is possible to prevent the sulfur poisoning of the SCR catalyst 422 due to the exhaust gas containing the sulfur-containing material at a high concentration.

When the control part 30 determines an end of the regeneration of the sulfur adsorption part 41 on the basis of the measured value of the sulfur concentration measurement part 313, the execution time of the regeneration operation, or the like, the valves 224 and 216 are opened and the valve 223 in the auxiliary passage 22a is closed. The additional regeneration operation for regenerating the methane oxidation catalyst 421 is thereby performed.

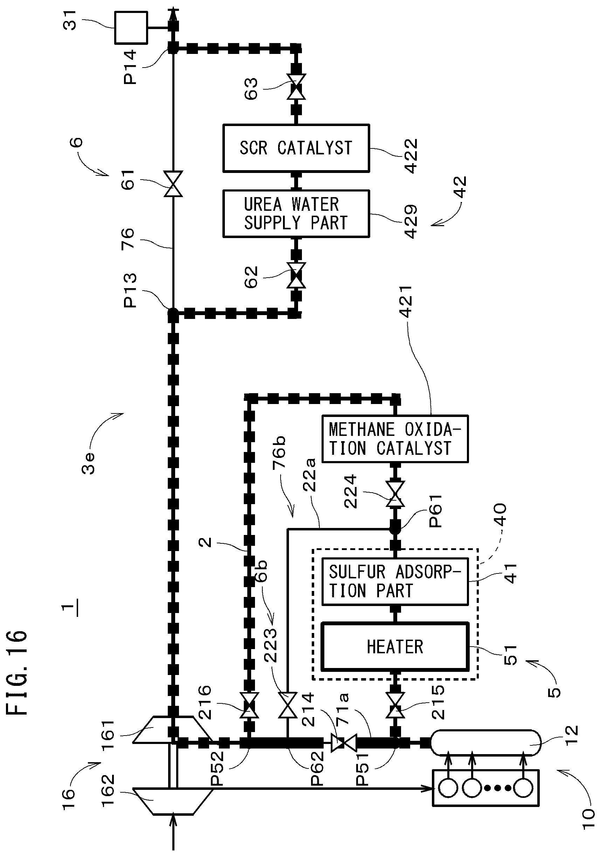

FIG. 16 is a view used for explaining the additional regeneration operation in the exhaust gas treatment apparatus 3e. In the additional regeneration operation, the high-temperature exhaust gas having passed through the heater 51 and the sulfur adsorption part 41 goes through the methane oxidation catalyst 421 (see the thick broken line in FIG. 16), and the sulfur-containing material adsorbed to the methane oxidation catalyst 421 is desorbed therefrom. In the additional regeneration operation, the temperature of the exhaust gas heated by the heater 51 may be different from the heated temperature in the regeneration operation for regenerating the sulfur adsorption part 41. In the exhaust gas treatment apparatus 3e, the regeneration of the sulfur adsorption part 41 and the regeneration of the methane oxidation catalyst 421 can be performed on individual temperature conditions appropriate thereto, respectively. The exhaust gas having passed through the methane oxidation catalyst 421 goes toward the connection position P52 is mixed with the exhaust gas having passed through the heater bypass passage 71a (see the thick one-dot chain line in FIG. 16). Thus, the connection position P52 is the mixed position where the high-temperature exhaust gas having passed through the heater 51 and the exhaust gas not having passed through the heater 51 are mixed together. The temperature of the exhaust gas after the mixture at the mixed position P52 becomes not higher than the limiting temperature.

Further, in the additional regeneration operation, the passage switching part 6 closes the valve 61 and opens the valves 62 and 63. The non-bypass state is thereby formed, in which the exhaust gas having passed through the connection position P52 and the turbine 161 does not flow in the catalyst bypass passage 76 but flows in the urea water supply part 429 and the SCR catalyst 422. Since the amount of adsorbed sulfur-containing material is small in the methane oxidation catalyst 421 and the concentration of the sulfur-containing material contained in the exhaust gas is sufficiently low, reduction in the catalytic activity due to the deposition of acidic ammonium sulfate or ammonium sulfate does not occur in the SCR catalyst 422. Further, depending on the amount of sulfur-containing material adsorbed to the methane oxidation catalyst 421, or the like, in the additional regeneration operation, the passage switching part 6 may maintain in the bypass state. It is thereby possible to more reliably prevent the sulfur poisoning of the SCR catalyst 422.

When the control part 30 determines an end of the additional regeneration operation on the basis of the measured value of the sulfur concentration measurement part 313, the execution time of the additional regeneration operation, or the like, the valve 214 in the heater bypass passage 71a is gradually closed. Further, the gas temperature switching part 5 brings the heater 51 into the OFF state, to thereby switch from the high-temperature gas inflow state to the normal gas inflow state. In the exhaust gas treatment apparatus 3e, the additional regeneration operation is thereby ended and the normal operation is restarted.

Like in the exhaust gas treatment apparatus 3a shown in FIG. 4, in the case where the sulfur poisoning of the methane oxidation catalyst 421 can be sufficiently suppressed by the sulfur adsorption part 41, the additional regeneration operation may be omitted. Depending on the temperature of the exhaust gas heated by the heater 51, there is a possibility that degradation due to sintering by the heat may be caused in the methane oxidation catalyst 421. When the additional regeneration operation is omitted (in other words, when only the regeneration operation for regenerating the sulfur adsorption part 41 is performed), it is possible to prevent the degradation due to the sintering of the methane oxidation catalyst 421.

As described above, in the exhaust gas treatment apparatus 3e, in the regeneration of the sulfur adsorption part 41, the exhaust gas having passed through the sulfur adsorption part 41 and the exhaust gas having passed through the heater bypass passage (a portion between the connection position P51 and the mixed position P62 in the heater bypass passage 71a and in FIG. 15) are mixed at the mixed position P62 on the downstream side of the sulfur adsorption part 41. In the case where the additional regeneration operation is omitted, it is thereby possible to use a cheap material on the downstream side relative to the mixed position P62. In the case where the additional regeneration operation is performed, it is possible to use a cheap material on the downstream side relative to the mixed position P52 in the regeneration of the methane oxidation catalyst 421.

Further, when the control part 30 switches the gas temperature switching part 5 from the normal gas inflow state to the high-temperature gas inflow state to thereby perform the regeneration of the sulfur adsorption part 41, the control part 30 switches the passage switching part 6 from the non-bypass state to the bypass state. It is thereby possible to suppress the sulfur poisoning of the target catalyst (the SCR catalyst 422 in FIG. 15) in the regeneration of the sulfur adsorption part 41.

In the exhaust gas treatment apparatus 3e, by providing the methane oxidation catalyst 421 between the engine 10 and the turbine 161 in the exhaust passage 2, it is possible to increase the activity of the methane oxidation catalyst 421 and thereby efficiently oxidize methane in the exhaust gas. Further, by providing the sulfur adsorption part 41 between the engine 10 and the turbine 161, it is possible to suppress the sulfuric acid corrosion of the blades and deposition of the sulfur-derived sediments on the blades and the inside of the casing in the turbine 161.

The exhaust gas treatment apparatus 3e includes another catalyst bypass passage 76b and another passage switching part 6b. The catalyst bypass passage 76b is provided in the exhaust passage 2 and bypasses the methane oxidation catalyst 421. The passage switching part 6b is capable of switching between the bypass state in which the exhaust gas flows in the catalyst bypass passage 76b and the non-bypass state in which the exhaust gas flows in the methane oxidation catalyst 421. The control part 30 switches the passage switching part 6b from the non-bypass state to the bypass state in execution of the regeneration of the sulfur adsorption part 41. It is thereby possible to prevent the sulfur poisoning of the methane oxidation catalyst 421 in the regeneration of the sulfur adsorption part 41.

In the above-described exhaust gas treatment apparatuses 3 and 3a to 3e, various modifications can be made.

In the above-described exhaust gas treatment apparatuses 3 and 3a to 3e, the catalyst part 42 includes both the methane oxidation catalyst 421 and the SCR catalyst 422, but the catalyst part 42 may include only either the methane oxidation catalyst 421 or the SCR catalyst 422. Also in this case, by providing the catalyst bypass passage which bypasses the one catalyst and forming the bypass state in which the high-temperature exhaust gas flows in the catalyst bypass passage in the regeneration of the sulfur adsorption part 41, it is possible to suppress the sulfur poisoning of the one catalyst. The same applies to a case where the catalyst part 42 includes a catalyst other than the methane oxidation catalyst 421 or the SCR catalyst 422.

In the exhaust gas treatment apparatuses 3 and 3a to 3e, the sulfur adsorption part 41 may be omitted. In the exhaust gas treatment apparatuses 3 and 3a to 3e in which the sulfur adsorption part 41 is omitted, the sulfur-containing material is adsorbed to the methane oxidation catalyst 421 in the normal operation. In other words, the methane oxidation catalyst 421 oxidizes methane contained in the exhaust gas and functions as the sulfur adsorption part by adsorbing a substance containing sulfur in the exhaust gas. Also in this case, in the regeneration of the methane oxidation catalyst 421 serving as the sulfur adsorption part, by forming the bypass state in which the high-temperature exhaust gas flows in the catalyst bypass passage 76, it is possible to suppress the sulfur poisoning of the SCR catalyst 422.

Depending on the design of the exhaust gas treatment apparatuses 3 and 3a to 3e, the heater bypass passages 71 and 71a may be omitted.

Though description has been made on the case where any one of the exhaust gas treatment apparatuses 3 and 3a to 3e is provided in a ship in the above-described preferred embodiment, the exhaust gas treatment apparatuses 3 and 3a to 3e may be provided in various facilities such as a power plant or the like, where an engine is used. Further, a fuel not containing methane may be used in the engine, and the exhaust gas treatment apparatuses 3 and 3a to 3e may not include any methane oxidation catalyst 421.

The configurations in the above-described preferred embodiments and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 2: Exhaust passage
- 3, 3a to 3e: Exhaust gas treatment apparatus
- 5, 5a: Gas temperature switching part
- 6, 6a, 6b: Passage switching part
- 10: Engine
- 16: Turbocharger
- 30: Control part
- 41: Sulfur adsorption part
- 42: Catalyst part
- 51: Heater
- 161: Turbine
- 421: Methane oxidation catalyst
- 422: SCR catalyst
- 76, 76a, 76b: Catalyst bypass passage

## Claims

1. An exhaust gas treatment apparatus, comprising:
a sulfur adsorption part provided in an exhaust passage in which exhaust gas discharged from an engine flows, for adsorbing a substance containing sulfur in said exhaust gas;
a catalyst part provided on a downstream side of said sulfur adsorption part in said exhaust passage, for oxidizing or reducing a predetermined substance in said exhaust gas;
a gas temperature switching part capable of switching between a normal gas inflow state in which said exhaust gas having a normal temperature flows into said sulfur adsorption part and a high-temperature gas inflow state in which said exhaust gas having a temperature higher than said normal temperature flows into said sulfur adsorption part;
a catalyst bypass passage provided in said exhaust passage, bypassing a target catalyst included in said catalyst part;
a passage switching part capable of switching between a bypass state in which said exhaust gas flows in said catalyst bypass passage and a non-bypass state in which said exhaust gas flows in said target catalyst; and
a control part for switching said passage switching part from said non-bypass state to said bypass state in execution of regeneration of said sulfur adsorption part by switching said gas temperature switching part from said normal gas inflow state to said high-temperature gas inflow state.

2. The exhaust gas treatment apparatus according to claim 1, wherein
said engine uses gas containing methane as a fuel, and
said catalyst part includes a methane oxidation catalyst used for oxidizing methane contained in said exhaust gas.

3. The exhaust gas treatment apparatus according to claim 2, wherein
said target catalyst of said catalyst part includes an SCR catalyst.

4. The exhaust gas treatment apparatus according to claim 3, further comprising:
another catalyst bypass passage provided in said exhaust passage, bypassing said methane oxidation catalyst; and
another passage switching part capable of switching between a bypass state in which said exhaust gas flows in said another catalyst bypass passage and a non-bypass state in which said exhaust gas flows in said methane oxidation catalyst,
wherein said control part switches said another passage switching part from said non-bypass state to said bypass state in execution of regeneration of said sulfur adsorption part.

5. The exhaust gas treatment apparatus according to claim 4, wherein
said control part switches said another passage switching part from said bypass state to said non-bypass state while maintaining said gas temperature switching part in said high-temperature gas inflow state after an end of regeneration of said sulfur adsorption part.

6. The exhaust gas treatment apparatus according to any one of claims 2 to 5, wherein
a turbine of a turbocharger is provided in said exhaust passage, and
said methane oxidation catalyst is provided between said engine and said turbine.

7. The exhaust gas treatment apparatus according to any one of claims 1 to 5, wherein
a turbine of a turbocharger is provided in said exhaust passage,
said exhaust gas having passed through said turbine flows into said sulfur adsorption part and said catalyst part when said gas temperature switching part is in said normal gas inflow state, and
said exhaust gas taken out from between said engine and said turbine in said exhaust passage flows into said sulfur adsorption part when said gas temperature switching part is in said high-temperature gas inflow state.

8. The exhaust gas treatment apparatus according to any one of claims 1 to 5, wherein
a turbine of a turbocharger is provided in said exhaust passage, and
said sulfur adsorption part is provided between said engine and said turbine.

9. The exhaust gas treatment apparatus according to any one of claims 1 to 5, wherein
said gas temperature switching part heats part of said exhaust gas by using a heater to cause said part of said exhaust gas to flow into said sulfur adsorption part in said high-temperature gas inflow state, and
a remainder of said exhaust gas does not pass through said heater and said part of said exhaust gas having passed through said sulfur adsorption part and said remainder of said exhaust gas not having passed through said heater are mixed together to thereby pass through said catalyst bypass passage.
